# EUROPÄISCHE PATENTSCHRIFT

(11) **EP 3 566 102 B1**
(45) Veröffentlichungstag und Bekanntmachung des Hinweises auf die Patenterteilung: **18.11.2020**
(21) Anmeldenummer: 18700006.2
(22) Anmeldetag: 02.01.2018
(51) Int. Cl.: G05B 23/02, H04L 12/26

(54) **SELBSTKONFIGURIERENDE ÜBERWACHUNGSEINRICHTUNG FÜR EIN AUF EINEM INDUSTRIELLEN DATENKOMMUNIKATIONSNETZWERK BASIERENDES AUTOMATISIERUNGSSYSTEM**
SELF-CONFIGURING MONITORING DEVICE FOR AN AUTOMATION SYSTEM WHICH IS BASED ON AN INDUSTRIAL DATA COMMUNICATION NETWORK
DISPOSITIF DE SURVEILLANCE AUTOCONFIGURABLE POUR UN SYSTÈME D'AUTOMATISATION BASÉ SUR UN RÉSEAU DE COMMUNICATION DE DONNÉES INDUSTRIEL

(30) Priorität: 05.01.2017 DE 102017200134
(43) Veröffentlichungstag der Anmeldung: 13.11.2019
(73) Patentinhaber: Fraunhofer-Gesellschaft zur Förderung der angewandten Forschung e.V., 80686 München (DE)
(72) Erfinder: WINDMANN, Stefan, 32657 Lemgo (DE)
(74) Vertreter: Stöckeler, Ferdinand
(86) Internationale Anmeldenummer: PCT/EP2018/050028
(87) Internationale Veröffentlichungsnummer: WO 2018/127475

(56) Entgegenhaltungen:
- WO-A1-2013/084205
- US-A1- 2012 271 587
- PENG LI ET AL: "Data Driven Condition Monitoring of Wind Power Plants Using Cluster Analysis", 2015 INTERNATIONAL CONFERENCE ON CYBER-ENABLED DISTRIBUTED COMPUTING AND KNOWLEDGE DISCOVERY, 1. Januar 2015 (2015-01-01), Seiten 131-136, XP055445642, DOI: 10.1109/CyberC.2015.16

## Beschreibung

Die Erfindung betrifft die Überwachung eines Prozesses. Genauer betrifft die Erfindung die automatische Überwachung eines Prozesses, welcher mittels eines Automatisierungssystems gesteuert ist, welches ein industrielles Datenkommunikationsnetzwerk, ein an das industrielle Datenkommunikationsnetzwerk angeschlossenes Prozesssteuergerät und ein oder mehrere an das industrielle Datenkommunikationsnetzwerk angeschlossene Feldgeräte umfasst, um so Störungen im Ablauf des Prozesses automatisch erkennen zu können.

Bei bekannten Lösungen sind Überwachungsmodule vorgesehen, welche direkt in die Software des Prozessessteuergerätes, direkt in die Software der Feldgeräte oder direkt in die Software eines dem Prozesssteuergerät übergeordneten Überwachungsrechner integriert sind. Da Prozesssteuergeräte, Feldgeräte und auch Überwachungsrechner standardisierte Geräte sind, welche zur Steuerung unterschiedlichster Prozesse verwendet werden, müssen derartige Überwachungsmodule aufwändig konfiguriert werden, um den jeweiligen Prozess überwachen zu können.

Aus dem Dokument [1] ist darüber hinaus ein Verfahren bekannt, bei dem mittels einer Anlagenüberwachungseinheit der regelmäßige Datenverkehr auf einem Feldbus, der der Steuerung eines Prozesses dient, abgehört wird. Sofern der regelmäßige Datenverkehr Hinweise auf eine Störung an einem der Feldgeräte liefert, fordert die Anlagenüberwachungseinheit weitere Informationen von dem jeweiligen Feldgerät an. Auch eine derartige Anlagenüberwachungseinheit muss aufwändig konfiguriert werden, um den jeweiligen Prozess überwachen zu können.

Weiterhin ist aus dem Dokument [2] ein systemintegrierter Busmonitor bekannt, der ebenfalls aufwändig konfiguriert werden muss.

Darüber hinaus ist aus dem Dokument [3] ein weiteres System mit einem integrierten Busmonitor bekannt, der allerdings ebenfalls aufwändig konfiguriert werden muss.

Weitere Einzelaspekte der Überwachung eines Prozesses sind aus den Dokumenten [4] und [5] bekannt.

Die Aufgabe der vorliegenden Erfindung besteht darin, die Überwachung eines Prozesses, welcher mittels eines Automatisierungssystems gesteuert ist, welches ein industrielles Datenkommunikationsnetzwerk, ein an das industrielle Datenkommunikationsnetzwerk angeschlossenes Prozesssteuergerät und ein oder mehrere an das industrielle Datenkommunikationsnetzwerk angeschlossene Feldgeräte umfasst, zu verbessern.

Die Aufgabe wird in einem ersten Aspekt gelöst durch eine Überwachungseinrichtung zum Überwachen eines Prozesses, welcher mittels eines Automatisierungssystems gesteuert ist, welches ein industrielles Datenkommunikationsnetzwerk, ein an das industrielle Datenkommunikationsnetzwerk angeschlossenes Prozesssteuergerät und ein oder mehrere an das industrielle Datenkommunikationsnetzwerk angeschlossene Feldgeräte umfasst, wobei in dem Automatisierungssystem mehrere Prozesssignale vorgesehen sind, wobei jedem der Prozesssignale ein Signalformat und ein Kanal eines der Feldgeräte zugewiesen ist, und wobei für jedes der Prozesssignale Signalwerte in dem jeweils zugewiesenen Signalformat gemeinsam mit einer Kanalkennung des jeweiligen Kanals jeweils in einem Prozesstelegramm über das industrielle Datenkommunikationsnetzwerk übertragbar sind,

wobei die Überwachungseinrichtung zum automatischen Erstellen einer Prozesssignalbeschreibung während einer Konfigurationsphase der Überwachungseinrichtung anhand wenigstens eines während einer Initialisierungsphase des industriellen Datenkommunikationsnetzwerks zwischen dem Prozesssteuergerät und wenigstens einem der Feldgeräte übertragenen Initialisierungstelegramms für das Automatisierungssystem und anhand von Gerätebeschreibungsdateien, welche jeweils einem der Feldgeräte zugeordnet sind, ausgebildet ist, wobei die Prozesssignalbeschreibung für wenigstens eines der Prozesssignale das zugehörige Signalformat und die zugehörige Kanalkennung angibt,
wobei die Überwachungseinrichtung zum automatischen Erstellen einer Datenbasis während einer Lernphase der Überwachungseinrichtung ausgebildet ist, wobei die Datenbasis für wenigstens eines der Prozesssignale mehrere Signalwerte des jeweiligen Prozesssignals umfasst, welche jeweils mit einem Zeitstempel versehen sind, wobei die Signalwerte und die zugehörigen Zeitstempel unter Zuhilfenahme der Prozesssignalbeschreibung aus mehreren über das industrielle Datenkommunikationsnetzwerk übertragenen Prozesstelegrammen extrahiert sind, wobei für wenigstens eines der Prozesssignale aus der Datenbasis für die Signalwerte des jeweiligen Prozesssignales wenigstens ein unzulässiger Wertebereich abgeleitet sind, und
wobei die Überwachungseinrichtung zum automatischen Erkennen einer Störung in dem Prozess während einer Betriebsphase der Überwachungseinrichtung ausgebildet ist, falls ein aktueller Signalwert der Signalwerte eines der Prozesssignale in dem jeweiligen unzulässigen Wertebereich liegt, wobei der aktuelle Signalwert unter Zuhilfenahme der Prozesssignalbeschreibung aus einem über das industrielle Datenkommunikationsnetzwerk übertragenen aktuellen Prozesstelegramm der Prozesstelegramme extrahiert ist.

Bei dem Prozess kann es sich um einen zyklischen technischen Prozess, insbesondere um einen zyklischen industriellen technischen Prozess, beispielsweise um einen zyklischen industriellen technischen Produktionsprozess handeln.

Das Automatisierungssystem umfasst ein industrielle Datenkommunikationsnetzwerk, wenigstens ein daran angeschlossenes Prozesssteuergerät und ein oder mehrere daran angeschlossene Feldgeräte.

Das industrielle Datenkommunikationsnetzwerk dient der Übertragung von Prozesssignalen zwischen dem Prozesssteuergerät und den Feldgeräten.

Bei dem Prozesssteuergerät kann es sich insbesondere um eine speicherprogrammierbare Steuerung handeln. Das Prozesssteuergerät dient der Steuerung des Prozesses mittels einer Kommunikation mit den Feldgeräten.

Die Feldgeräte sind solche Geräte, welche Prozessvariablen des gesteuerten Prozesses messen und/oder beeinflussen. Dazu sind Sensoren und oder Aktoren vorgesehen, weiche jeweils an einen Kanal eines der Feldgeräte angeschlossen sind. Ein Feldgerät kann ein- oder mehrkanalig sein. Dabei ist jedem der Prozesssignale ein Kanal eines der Feldgeräte zugewiesen, so dass jedes der Prozesssignale über den zugewiesenen Kanal einem Aktor oder einem Sensor zugeordnet ist. Weiterhin ist jedem der Prozesssignale ein Signalformat zugewiesen, so dass der jeweilige Sender und der jeweilige Empfänger, welchen das Signalformat bekannt ist, miteinander kommunizieren können.

Die Übertragung der Prozesssignale erfolgt derart, dass Signalwerte des jeweiligen Prozesssignals in dem jeweils zugewiesenen Signalformat gemeinsam mit einer Kanalkennung des jeweiligen Kanals in einem Prozesstelegramm über das industrielle Datenkommunikationsnetzwerk übertragen werden.

Erfindungsgemäß ist die Überwachungseinrichtung zum automatischen Erstellen einer Prozesssignalbeschreibung während einer Konfigurationsphase der Überwachungseinrichtung ausgebildet. Die Prozesssignalbeschreibung wird durch eine Auswertung von standardisierten Initialisierungstelegrammen, welche während einer Initialisierungsphase des Automatisierungssystems zwischen dem Prozesssteuergerät und den Feldgeräten ausgetauscht werden, und durch eine Auswertung von Gerätebeschreibungsdateien, welche jeweils einen der Feldgeräte zugeordnet sind, ermittelt.

Die Prozesssignalbeschreibung enthält eine Beschreibung der Prozesssignale des Automatisierungssystems, wobei die Beschreibung wenigstens das zugehörige Signalformat und die zugehörige Kanalkennung umfasst.

Die Prozesssignalbeschreibung kann als Datei in einen flüchtigen oder in einem nicht flüchtigen Speicher abgelegt werden. Ebenso kann die Prozesssignalbeschreibung in eine Datenbank abgelegt werden.

Bei der Gerätebeschreibungsdatei handelt es sich um eine Datei, welche von dem Hersteller eines Feldgerätes für eben dieses Feldgerät erstellt wird, und welche grundlegende Eigenschaften des Feldgerätes in einem standardisierten Format enthält.

Erfindungsgemäß ist die Überwachungseinrichtung zum automatischen Erstellen einer Datenbasis während einer Lernphase der Überwachungseinrichtung ausgebildet. Die Datenbasis umfasst für wenigstens eines der Prozesssignale mehrere Signalwerte des jeweiligen Prozesssignals, welche mit einem Zeitstempel versehen sind. Die Signalwerte und die zugehörigen Zeitstempel werden automatisch während einer Betriebsphase des Automatisierungssystems aus über das industrielle Datenkommunikationsnetzwerk übertragenen Prozesstelegrammen unter Zuhilfenahme der Prozesssignalbeschreibung extrahiert. Weiterhin wird in der Lernphase aus der Datenbasis für wenigstens eines der Prozesssignale wenigstens ein unzulässiger Wertebereich für die Signalwerte des jeweiligen Prozesssignales abgeleitet.

Der unzulässige Wertebereich wird also aus Erfahrungswerten bzw. historischen Prozessdaten gewonnen und gibt an, welche Signalwerte im störungsfreien Ablauf des zu steuernden Prozesses nicht erreicht werden können.

Erfindungsgemäß ist die Überwachungseinrichtung zum automatischen Erkennen einer Störung in dem Prozess während einer Betriebsphase der Überwachungseinrichtung ausgebildet. Eine Störung wird daran erkannt, dass ein aktueller Signalwert eines der Prozesssignale in dem jeweiligen unzulässigen Wertebereich liegt. Der aktuelle Signalwert ist dabei der aktuell ausgewertete Signalwert und damit im Regelfall der zuletzt empfangenen Signalwert. Der aktuelle Signalwert wird dabei unter Zuhilfenahme der Prozesssignalbeschreibung aus dem aktuellen Prozesstelegramm extrahiert. Das aktuelle Prozesstelegramm ist dabei das aktuell ausgewertete Prozesstelegramm und somit im Allgemeinen das zuletzt empfangenen Prozess Telegramm.

Eine erkannte Störung kann dann über eine Benutzerschnittstelle an einen Bediener des Automatisierungssystems ausgegeben werden. Ebenso kann die erkannte Störung an das Prozesssteuergerät und/oder an einen dem Prozesssteuergerät übergeordneten Überwachungsrechner gesendet werden. Auf diese Weise ist es möglich, den Prozess im Störungsfall manuell oder automatisch zu unterbrechen.

Die erfindungsgemäße Überwachungseinrichtung erlaubt das automatische Erkennen einer Störung im Ablauf des überwachten Prozesses. Dabei kann die erfindungsgemäße Überwachungseinrichtung problemlos in jedes Automatisierungssystem integriert werden, welches auf einem industriellen Datenkommunikationsnetzwerk basiert. Zur Integration ist es lediglich erforderlich, die Überwachungseinrichtung so mit dem Automatisierungssystem so zu verbinden, dass die ohnehin über das industrielle Datenkommunikationsnetzwerk übertragenen Initialisierungstelegramme und Prozesstelegramme auch der Überwachungseinrichtung zur Verfügung stehen. Eine manuelle Konfiguration der erfindungsgemäßen Überwachungseinrichtung ist nicht erforderlich. Weiterhin ist keine Änderung der Konfiguration des Prozesssteuergeräts oder der Konfiguration der Feldgeräte erforderlich.

Insbesondere hat die erfindungsgemäße Überwachungseinrichtung den Vorteil, dass Signalwerte eines der Prozesssignale auch dann ohne manuelle Konfiguration automatisch erfasst werden können, wenn das zugehörige Signalformat und der zugehörige Kanal zunächst nicht bekannt sind. Zudem kann eine Erkennung von Störungen auch dann automatisch und ohne Konfigurationsaufwand erfolgen, wenn unzulässige Wertebereiche für die Signalwerte der Prozesssignale zunächst unbekannt sind.

Dabei sind Ausführungsbeispiele denkbar, bei denen die Prozesssignale, für die jeweils mindestens ein unzulässiger Wertebereich abgeleitet ist, Messsignale jeweils eines Sensors, der an einen der Kanäle eines der Feldgeräte angeschlossen ist, sind. Ebenso sind auch Ausführungsbeispiele denkbar, bei denen die Prozesssignale, für die jeweils mindestens ein unzulässiger Wertebereich abgeleitet ist, Steuersignale des Steuergeräts für jeweils einen Aktor, der an einen der Kanäle eines der Feldgeräte angeschlossenen ist, sind.

Gemäß einer zweckmäßigen Weiterbildung der Erfindung ist das industrielle Datenkommunikationsnetzwerk ein Industrial Ethernet. Das Industrial Ethernet kann auf den Ebenen 1-2 des ISO-OSI Standards basieren, wobei die Ethernet-Ubertragungstechnik und das Buszugriffsverfahren des Ethernet-Standards verwendet werden kann. Beispiele für das Industrial Ethernet sind Profinet, Ethernet/IP oder EtherCAT.

Gemäß einer vorteilhaften Weiterbildung der Erfindung umfassen die Prozesssignale, für die jeweils mindestens ein unzulässiger Wertebereich abgeleitet ist, wenigstens ein Messsignal eines Sensors, der an einen der Kanäle eines der Feldgeräte angeschlossen ist, und/oder wenigstens ein Steuersignal für einen Aktor, der an einen der Kanäle eines der Feldgeräte angeschlossenen ist. Die Signalwerte des Messsignals können als Messwerte bezeichnet werden. Weiterhin können die Signalwerte des Steuersignals als Steuerwerte bezeichnet werden. Auf diese Weise kann eine Störung sowohl dann erkannt werden, wenn unzulässige Steuerwerte auftreten, als auch, wenn unzulässige Messwerte auftreten.

Gemäß einer zweckmäßigen Weiterbildung der Erfindung sind die Gerätebeschreibungsdateien in der Überwachungseinrichtung hinterlegt. Alternativ könnte die Überwachungseinrichtung auch zur Abfrage der benötigten Gerätebeschreibungsdateien über ein Datennetzwerk ausgebildet sein.

Nach einer vorteilhaften Weiterbildung der Erfindung ist die Überwachungseinrichtung für jedes der Feldgeräte zum Auslesen einer Herstellerkennung und/oder einer Gerätetypkennung aus dem wenigstens einen Initialisierungstelegramm während der Konfigurationsphase ausgebildet. Dies ermöglicht eine einfache automatische Zuordnung des Feldgerätes zu einem Hersteller und/oder einem Gerätetyp.

Nach einer zweckmäßigen Weiterbildung der Erfindung ist die Überwachungseinrichtung für jedes der Feldgeräte zum Auswählen der zugehörigen Gerätebeschreibungsdatei anhand der Herstellerkennung und/oder der Gerätetypkennung ausgebildet. Dies ermöglicht eine einfache und automatische Identifikation der Gerätebeschreibungsdatei, welche dem jeweiligen Feldgeräte zugehörige ist.

Gemäß einer vorteilhaften Weiterbildung der Erfindung ist die Überwachungseinrichtung für jedes der Feldgeräte zum Auslesen der Kanalkennung aus dem wenigstens einen Initialisierungstelegramm während der Konfigurationsphase ausgebildet. Dies ermöglicht eine einfache Zuordnung von Prozesstelegrammen zu Kanälen der Feldgeräte, da die Prozesstelegramme ebenfalls die Kanalkennung umfassen.

Gemäß einer vorteilhaften Weiterbildung der Erfindung umfasst das Signalformat eines der Prozesssignale eine erste Startinformation für die Signalwerte in den jeweiligen Prozesstelegrammen, wobei die Überwachungseinrichtung für jedes der Prozesssignale zum Auslesen der ersten Startinformation aus der Gerätebeschreibungsdatei desjenigen Feldgerätes, welches mit der zum jeweiligen Prozesssignal gehörigen Kanalkennung korrespondiert, ausgebildet ist.

Nach einer vorteilhaften Weiterbildung der Erfindung umfasst das Signalformat eines der Prozesssignale eine zweite Startinformation für die Signalwerte in den jeweiligen Prozesstelegrammen, wobei die Überwachungseinrichtung für jedes der Prozesssignale zum Auslesen der zweiten Startinformation aus dem wenigstens einen Initialisierungstelegramm während der Konfigurationsphase ausgebildet ist.

Die so gewonnene erste Startinformation und/oder die so gewonnene zweite Startinformation ermöglichen die exakte Ermittlung einer Startposition der Signalwerte in dem Prozesstelegramm.

Gemäß einer zweckmäßigen Weiterbildung der Erfindung umfasst das Signalformat eines der Prozesssignale eine Datentypdefinition für die Signalwerte in den jeweiligen Prozesstelegrammen, wobei die Überwachungseinrichtung für jedes der Prozesssignale zum Auslesen der Datentypdefinition aus der Gerätebeschreibungsdatei desjenigen Feldgerätes, welches mit der zum jeweiligen Prozesssignal gehörigen Kanalkennung korrespondiert, während der Konfigurationsphase ausgebildet ist.

Gemäß einer vorteilhaften Weiterbildung der Erfindung umfasst das Signalformat eines der Prozesssignale eine Datenlängendefinition für die Signalwerte in den jeweiligen Prozesstelegrammen, wobei die Überwachungseinrichtung für jedes der Prozesssignale zum Auslesen der Datenlängendefinition aus der Gerätebeschreibungsdatei desjenigen Feldgerätes, welches mit der zum jeweiligen Prozesssignal gehörigen Kanalkennung korrespondiert, während der Konfigurationsphase ausgebildet ist.

Diese Merkmale ermöglichen eine einfache automatische Extraktion der Signalwerte aus den Prozesstelegrammen.

Gemäß einer vorteilhaften Weiterbildung der Erfindung ist die Überwachungseinrichtung zum Auslesen von Namen der Feldgeräte aus dem wenigstens einen Initialisierungstelegramm während der Konfigurationsphase ausgebildet, wobei die Überwachungseinrichtung zur Ausgabe eines Datensatzes ausgebildet ist, der wenigstens einen der Signalwerte eines der Prozesssignale und den Namen des dem jeweiligen Prozesssignal zugeordneten Feldgerätes umfasst.

Nach einer vorteilhaften Weiterbildung der Erfindung ist die Überwachungseinrichtung zum Auslesen von Namen der Prozesssignale aus der Gerätebeschreibungsdatei desjenigen Feldgerätes, welches mit der zum jeweiligen Prozesssignal gehörigen Kanalkennung korrespondiert, während der Konfigurationsphase ausgebildet, wobei die Überwachungseinrichtung zur Ausgabe eines Datensatzes ausgebildet ist, der wenigstens einen der Signalwerte eines der Prozesssignale und den Namen des jeweiligen Prozesssignals umfasst.

Gemäß einer vorteilhaften Weiterbildung der Erfindung ist die Überwachungseinrichtung zum Auslesen von Namen der Feldgeräte aus dem wenigstens einen Initialisierungstelegramm während der Konfigurationsphase ausgebildet, wobei die Überwachungseinrichtung zum Auslesen von Namen der Prozesssignale aus der Gerätebeschreibungsdatei desjenigen Feldgerätes, welches mit der zum jeweiligen Prozesssignal gehörigen Kanalkennung korrespondiert, während der Konfigurationsphase ausgebildet ist, und wobei die Überwachungseinrichtung zur Ausgabe eines Datensatzes ausgebildet ist, der wenigstens einen der Signalwerte eines der Prozesssignale, den Namen des jeweiligen Prozesssignals und den Namen des dem jeweiligen Prozesssignal zugeordneten Feldgerätes umfasst.

Der Datensatz kann insbesondere über eine Benutzerstelle ausgegeben werden. Die Ausgabe eines derartigen Datensatzes ermöglicht es dem Benutzer, den aktuellen Zustand des Prozesses oder den Verlauf des Prozesses schnell zu erfassen, so dass er gegebenenfalls erforderliche Bedienereingriffe ohne Zeitverzug durchführen kann.

Gemäß einer vorteilhaften Weiterbildung der Erfindung umfasst der Datensatz die Kanalkennung des dem jeweiligen Prozesssignal zugeordneten Kanals. Dies erleichtert dem Bediener die Erfassung des aktuellen Zustands des Prozesses oder des Verlaufs des Prozesses, insbesondere dann, wenn mehrkanalige Feldgeräte vorhanden sind.

Gemäß einer zweckmäßigen Weiterbildung der Erfindung ist der unzulässige Wertebereich für die Signalwerte eines der Prozesssignale mittels einer aus der Datenbasis gewonnenen Wissensbasis oder mittels eines aus der Datenbasis gewonnenen Prozessmodells abgeleitet. Die Wissensbasis kann qualitativ, beispielsweise in Form eines Expertensystems, oder quantitativ, beispielsweise in Form eines neuronalen Netzes, aufgebaut sein. Das Prozessmodell ist ein Modell, welches eine Simulation des normalen Verhaltens des Prozesses erlaubt.

Gemäß einer zweckmäßigen Weiterbildung der Erfindung ist der unzulässige Wertebereich für die Signalwerte eines der Prozesssignale so abgeleitet, dass er zeitabhängig ist. Das bedeutet also, dass der unzulässige Wertebereich nicht statisch sondern im Zeitverlauf variabel festgelegt ist. Dies verbessert die Genauigkeit der Erkennung einer Störung zumindest dann, wenn bekannt ist, wie sich ein Signalwert bei einem normalen Ablauf des Prozesses im Zeitverlauf ändert.

Gemäß einer zweckmäßigen Weiterbildung der Erfindung ist der unzulässige Wertebereich für die Signalwerte eines der Prozesssignale so abgeleitet, dass er von wenigstens einem Signalwert eines anderen der Prozesssignale abhängig ist. Dies verbessert die Genauigkeitserkennung einer Störung zumindest dann, wenn bekannt ist, wie sich ein Signalwert bei einem normalen Ablauf des Prozesses in Abhängigkeit von einem anderen Signalwert ändert.

In einem anderen Aspekt wird die Aufgabe gelöst durch ein Überwachungseinrichtungssystem zum Überwachen eines Prozesses, welcher mittels eines Automatisierungssystems gesteuert ist, wobei das Überwachungseinrichtungssystem umfasst:
eine erfindungsgemäße Überwachungseinrichtung und
ein passives Lesegerät, welches zum Auslesen von wenigstens einem über das industrielle Datenkommunikationsnetzwerk übertragenen Initialisierungstelegramm und zum Auslesen von Prozesstelegrammen ausgebildet ist und welches zum Senden des wenigstens einen Initialisierungstelegramms und der Prozesstelegramme an die Überwachungseinrichtung ausgebildet ist.

Ein passives Lesegerät, zum Beispiel ein Network TAP, ist ein Gerät, welches zum Lesen von Telegrammen in einem Netzwerk ausgebildet ist, jedoch nicht zum Senden von Telegrammen an das Netzwerk, wobei das passive Lesegerät so ausgebildet sein kann, dass es die über das Netzwerk gesendeten Telegramme nicht beeinflusst. Wenn das Lesegerät passiv ausgeführt ist, muss es, im Gegensatz zu den Feldgeräten, die aktive Netzwerkteilnehmer sind, nicht bei der Projektierung des Automatisierungssystems berücksichtigt werden, so dass das erfindungsgemäße Überwachungseinrichtungssystem problemlos bei jedem Automatisierungssystem, welches auf einem industriellen Datenkommunikationsnetzwerk basiert, vorgesehen werden kann.

Die Aufgabe wird in einem weiteren Aspekt gelöst durch ein Verfahren zum Betreiben einer Überwachungseinrichtung zum Überwachen eines Prozesses, welcher mittels eines Automatisierungssystems gesteuert ist, welches ein industrielles Datenkommunikationsnetzwerk, ein an das industrielle Datenkommunikationsnetzwerk angeschlossenes Prozesssteuergerät und ein oder mehrere an das industrielle Datenkommunikationsnetzwerk angeschlossene Feldgeräte umfasst, wobei in dem Automatisierungssystem mehrere Prozesssignale vorgesehen sind, wobei jedem der Prozesssignale ein Signalformat und ein Kanal eines der Feldgeräte zugewiesen ist, und wobei für jedes der Prozesssignale Signalwerte in dem jeweils zugewiesenen Signalformat gemeinsam mit einer Kanalkennung des jeweiligen Kanals jeweils in einem Prozesstelegramm über das industrielle Datenkommunikationsnetzwerk übertragbar ist, mit folgenden Schritten:
automatisches Erstellen einer Prozesssignalbeschreibung durch die Überwachungseinrichtung während einer Konfigurationsphase der Überwachungseinrichtung anhand wenigstens eines während einer Initialisierungsphase des industriellen Datenkommunikationsnetzwerks zwischen den Prozesssteuergerät und wenigstens einem der Feldgeräte übertragenen Initialisierungstelegramms für das Automatisierungssystem und anhand von Gerätebeschreibungsdateien, welche jeweils einem der Feldgeräte zugeordnet sind, wobei die Prozesssignalbeschreibung für wenigstens eines der Prozesssignale das zugehörige Signalformat und die zugehörige Kanalkennung angibt;
automatisches Erstellen einer Datenbasis durch die Überwachungseinrichtung während einer Lernphase der Überwachungseinrichtung, wobei die Datenbasis für wenigstens eines der Prozesssignale mehrere Signalwerte des jeweiligen Prozesssignals umfasst, welche jeweils mit einem Zeitstempel versehen werden, wobei die Signalwerte und die zugehörigen Zeitstempel unter Zuhilfenahme der Prozesssignalbeschreibung aus mehreren über das industrielle Datenkommunikationsnetzwerk übertragenen Prozesstelegrammen extrahiert werden, wobei für wenigstens eines der Prozesssignale aus der Datenbasis für die Signalwerte des jeweiligen Prozesssignales wenigstens ein unzulässiger Wertebereich abgeleitet wird; und
automatisches Erkennen einer Störung in dem Prozess durch die Überwachungseinrichtung während einer Betriebsphase der Überwachungseinrichtung, falls ein aktueller Signalwert der Signalwerte eines der Prozesssignale in dem jeweiligen unzulässigen Wertebereich liegt, wobei der aktuelle Signalwert unter Zuhilfenahme der Prozesssignalbeschreibung aus einem über das industrielle Datenkommunikationsnetzwerk übertragenen aktuellen Prozesstelegramm der Prozesstelegramme extrahiert wird.

In einem anderen Aspekt wird die Aufgabe gelöst durch ein Computerprogramm zur Durchführung eines erfindungsgemäßen Verfahrens, wenn es auf einem Computer oder Prozessor ausgeführt wird.

Im Folgenden werden die vorliegende Erfindung und deren Vorteile anhand von Figuren näher beschrieben.
- Fig. 1: illustriert in schematischer Darstellung Ausführungsbeispiele eines auf einem industriellen Datenkommunikationsnetzwerk basierenden Automatisierungssystems gemäß dem Stand der Technik;
- Fig. 2: illustriert in schematischer Darstellung ein Ausführungsbeispiel eines auf einem industriellen Datenkommunikationsnetzwerk basierenden Automatisierungssystems mit einer erfindungsgemäßen Überwachungseinrichtung;
- Fig. 3: illustriert in schematischer Darstellung ein Ausführungsbeispiel eines Verfahrens zum der erfindungsgemäßen Überwachungseinrichtung;
- Fig. 4: illustriert in schematischer Darstellung ein beispielhaftes Initialisierungstelegramm eines auf einem industriellen Datenkommunikationsnetzwerk basierenden Automatisierungssystems;
- Fig. 5: illustriert in schematischer Darstellung eine beispielhafte Gerätebeschreibungsdatei eines Feldgerätes für ein auf einem industriellen Datenkommunikationsnetzwerk basierenden Automatisierungssystem sowie ein beispielhaftes Prozesstelegramm eines auf einem industriellen Datenkommunikationsnetzwerk basierenden Automatisierungssystems;
- Fig. 6: illustriert in schematischer Darstellung eine beispielhafte Prozesssignalbeschreibung einer erfindungsgemäßen Überwachungseinrichtung;
- Fig. 7: illustriert in schematischer Darstellung eine Lernphase sowie eine Betriebsphase einer erfindungsgemäßen Überwachungseinrichtung.

Gleiche oder gleichartige Elemente oder Elemente mit gleicher oder äquivalenter Funktion sind im Folgenden mit gleichen oder gleichartigen Bezugszeichen versehen.

In der folgenden Beschreibung werden Ausführungsbeispiele mit einer Vielzahl von Merkmalen der vorliegenden Erfindung näher beschrieben, um ein besseres Verständnis der Erfindung zu vermitteln. Es ist jedoch festzuhalten, dass die vorliegende Erfindung auch unter Auslassung einzelner der beschriebenen Merkmale umgesetzt werden kann. Es sei auch darauf hingewiesen, dass die in verschiedenen Ausführungsbeispielen gezeigten Merkmale auch in anderer Weise kombinierbar sind, sofern dies nicht ausdrücklich ausgeschlossen ist oder zu Widersprüchen führen würde.

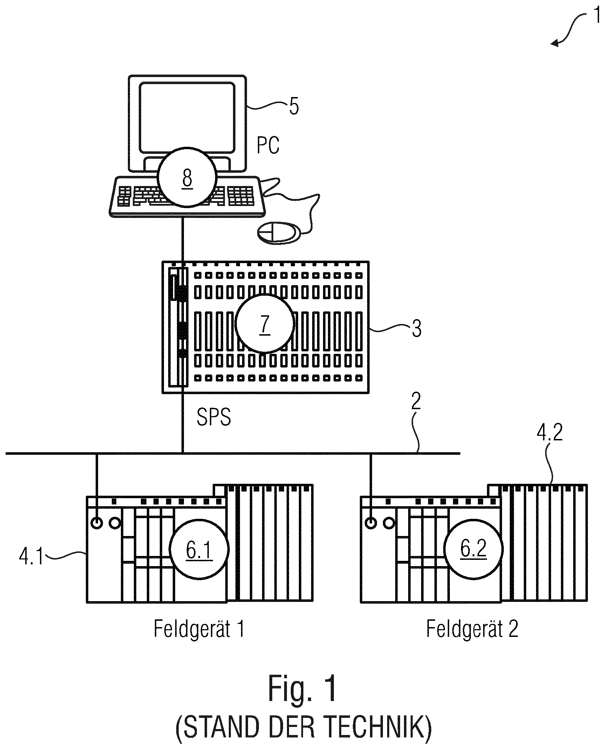

Fig. 1 illustriert in schematischer Darstellung Ausführungsbeispiele eines auf einem industriellen Datenkommunikationsnetzwerk 2 basierenden Automatisierungssystems 1 gemäß dem Stand der Technik. Das Automatisierungssystem 1 der Fig. 1 umfasst ein industrielles Datenkommunikationsnetzwerk 2, welches ein Prozesssteuergerät 3, ein erstes Feldgerät 4.1 und ein zweites Feldgerät 4.2 angeschlossen sind. Weiterhin umfasst das Automatisierungssystem einen dem Prozesssteuergerät 3 übergeordneten Überwachungsrechner 5, welcher mit den Prozesssteuergerät 3 verbunden ist. Das Prozesssteuergerät 3 kann eine speicherprogrammierbare Steuerung (SPS) sein. Der Überwachungsrechner 5 kann ein entsprechend eingerichteter Personalcomputer (PC) sein.

Bei einer ersten vorbekannten Lösung zur Überwachung eines mittels des Automatisierungssystems 1 gesteuerten Prozesses ist ein erstes Überwachungsmodul 6.1 direkt in die Software des ersten Feldgerätes 4.1 und ein zweites Überwachungsmodul 6.2 direkt in die Software des zweiten Feldgerätes 4.2 integriert.

Bei einer zweiten vorbekannten Lösung zur Überwachung eines derart gesteuerten Prozesses ist ein Überwachungsmodul 7 direkt in die Software des Prozesssteuergerätes 3 integriert.

Bei einer dritten vorbekannten Lösung ist ein Überwachungsmodul 8 direkt in die Software des übergeordneten Überwachungsrechners 5 integriert.

Derartige Überwachungsmodule 6, 7, 8 müssen aufwändig konfiguriert werden, um den jeweiligen Prozess überwachen zu können. Eine Installation der Überwachungsmodule 6, 7, 8 in den einzelnen Feldgeräten 4 oder dem Prozesssteuergerät 3 erfordert eine Modifikation der Software der Feldgeräte 4 und der Software des Prozesssteuergerätes 3. Zudem können bei der dritten Lösung lediglich solche Prozesssignale berücksichtigt werden, welche auch von dem Prozesssteuergerät 3 weitergeleitet werden. Dabei sind Modifikationen der Prozesssignale durch das Prozesssteuergerät 3 nicht auszuschließen.

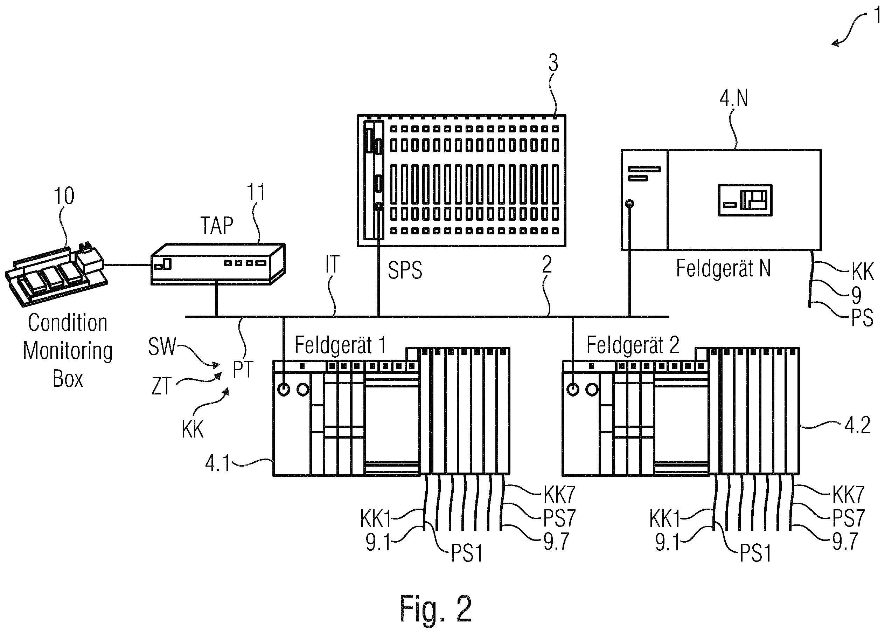

Fig. 2 illustriert in schematischer Darstellung ein Ausführungsbeispiel eines auf einem industriellen Datenkommunikationsnetzwerk 2 basierenden Automatisierungssystems 1 mit einer erfindungsgemäßen Überwachungseinrichtung 10.

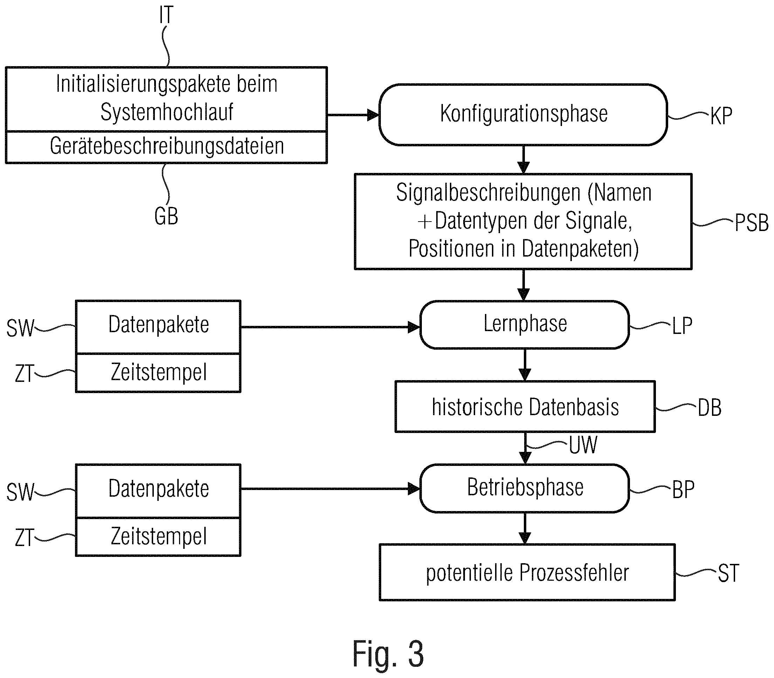

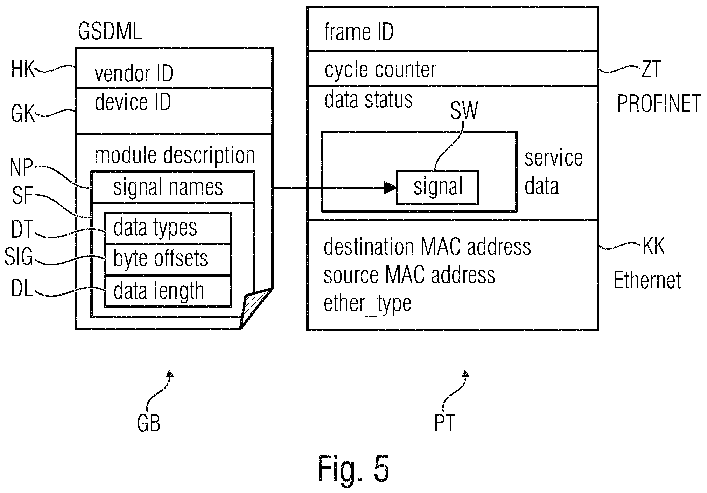

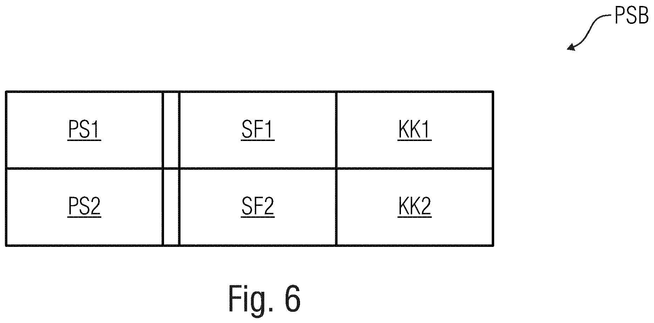

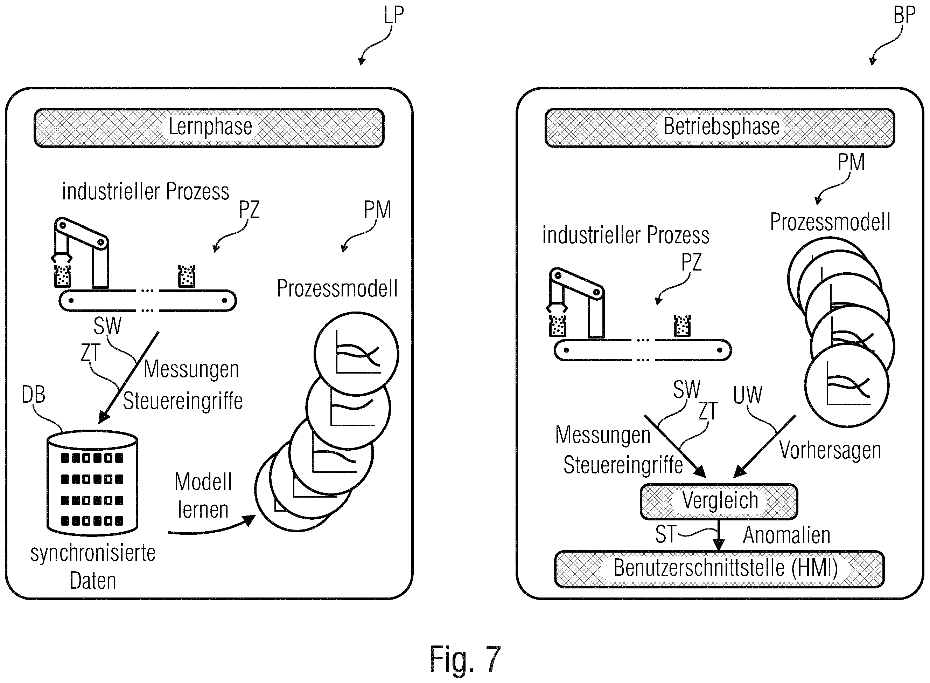

Die Erfindung schafft eine Überwachungseinrichtung zum Überwachen eines Prozesses PZ (siehe Fig. 7), welcher mittels eines Automatisierungssystems 1 gesteuert ist, welches ein industrielles Datenkommunikationsnetzwerk 2, ein an das industrielle Datenkommunikationsnetzwerk 2 angeschlossenes Prozesssteuergerät 3 und ein oder mehrere an das industrielle Datenkommunikationsnetzwerk 2 angeschlossene Feldgeräte 4 umfasst, wobei in dem Automatisierungssystem 1 mehrere Prozesssignale PS vorgesehen sind, wobei jedem der Prozesssignale PS ein Signalformat SF (siehe Fig. 5) und ein Kanal 9 eines der Feldgeräte 4 zugewiesen ist, und wobei für jedes der Prozesssignale PS Signalwerte SW in dem jeweils zugewiesenen Signalformat SF gemeinsam mit einer Kanalkennung KK des jeweiligen Kanals 9 jeweils in einem Prozesstelegramm PT über das industrielle Datenkommunikationsnetzwerk 2 übertragbar sind,
wobei die Überwachungseinrichtung 10 zum automatischen Erstellen einer Prozesssignalbeschreibung PSB (siehe Fig. 6) während einer Konfigurationsphase KP (siehe Fig. 3) der Überwachungseinrichtung 10 anhand wenigstens eines während einer Initialisierungsphase des industriellen Datenkommunikationsnetzwerks 2 zwischen dem Prozesssteuergerät 3 und wenigstens einem der Feldgeräte 4 übertragenen Initialisierungstelegramms IT für das Automatisierungssystem 1 und anhand von Gerätebeschreibungsdateien GB (siehe Fig. 5), welche jeweils einem der Feldgeräte 4 zugeordnet sind, ausgebildet ist, wobei die Prozesssignalbeschreibung PSB für wenigstens eines der Prozesssignale PS das zugehörige Signalformat SF und die zugehörige Kanalkennung KK angibt,
wobei die Überwachungseinrichtung 10 zum automatischen Erstellen einer Datenbasis DB (siehe Fig. 3) während einer Lernphase LP (siehe Fig. 3) der Überwachungseinrichtung 10 ausgebildet ist, wobei die Datenbasis DB für wenigstens eines der Prozesssignale PS mehrere Signalwerte SW des jeweiligen Prozesssignals PS umfasst, welche jeweils mit einem Zeitstempel ZT versehen sind, wobei die Signalwerte SW und die zugehörigen Zeitstempel ZT unter Zuhilfenahme der Prozesssignalbeschreibung PSB aus mehreren über das industrielle Datenkommunikationsnetzwerk 2 übertragenen Prozesstelegrammen PT extrahiert sind, wobei für wenigstens eines der Prozesssignale PS aus der Datenbasis DB für die Signalwerte SW des jeweiligen Prozesssignales PS wenigstens ein unzulässiger Wertebereich UW (siehe Figur 3) abgeleitet ist, und
wobei die Überwachungseinrichtung 10 zum automatischen Erkennen einer Störung ST (siehe Figur 3) in dem Prozess PZ während einer Betriebsphase BP der Überwachungseinrichtung 10 ausgebildet ist, falls ein aktueller Signalwert SW der Signalwerte SW eines der Prozesssignale PS in dem jeweiligen unzulässigen Wertebereich UW liegt, wobei der aktuelle Signalwert SW unter Zuhilfenahme der Prozesssignalbeschreibung PSB aus einem über das industrielle Datenkommunikationsnetzwerk 2 übertragenen aktuellen Prozesstelegramm PT der Prozesstelegramme PT extrahiert ist.

Gemäß einer vorteilhaften Weiterbildung der Erfindung umfassen die Prozesssignale PS, für die jeweils mindestens ein unzulässiger Wertebereich UW abgeleitet ist, wenigstens ein Messsignal eines Sensors, der an einen der Kanäle 9 eines der Feldgeräte 4 angeschlossen ist, und/oder wenigstens ein Steuersignal für einen Aktor, der an einen der Kanäle 9 eines der Feldgeräte 4 angeschlossenen ist.

Gemäß einer zweckmäßigen Weiterbildung der Erfindung ist das industrielle Datenkommunikationsnetzwerk 2 ein Industrial Ethernet 2.

Gemäß einer vorteilhaften Weiterbildung der Erfindung ist der unzulässige Wertebereich UW für die Signalwerte SW eines der Prozesssignale PS mittels einer aus der Datenbasis DB gewonnenen Wissensbasis oder mittels eines aus der Datenbasis gewonnenen Prozessmodells abgeleitet.

Gemäß einer zweckmäßigen Weiterbildung der Erfindung ist der unzulässige Wertebereich UW für die Signalwerte SW eines der Prozesssignale PS so abgeleitet, dass er zeitabhängig ist.

Gemäß einer vorteilhaften Weiterbildung der Erfindung ist der unzulässige Wertebereich UW für die Signalwerte SW eines der Prozesssignale PS so abgeleitet, dass er von wenigstens einem Signalwert SW eines anderen der Prozesssignale PS abhängig ist.

In einem weiteren Aspekt schafft die Erfindung ein Überwachungseinrichtungssystem zum Überwachen eines Prozesses PZ, welcher mittels eines Automatisierungssystems 1 gesteuert ist, welches ein industrielles Datenkommunikationsnetzwerk 2, ein an das industrielle Datenkommunikationsnetzwerk 2 angeschlossenes Prozesssteuergerät 3 und ein oder mehrere an das industrielle Datenkommunikationsnetzwerk 2 angeschlossene Feldgeräte 4 umfasst, wobei das Überwachungseinrichtungssystem umfasst:
eine erfindungsgemäße Überwachungseinrichtung 10 und
ein passives Lesegerät 11, welches zum Auslesen von wenigstens einem über das industrielle Datenkommunikationsnetzwerk 2 übertragenen Initialisierungstelegramm IT und zum Auslesen von Prozesstelegrammen PT ausgebildet ist und welches zum Senden des wenigstens einen Initialisierungstelegramms IT und der Prozesstelegramme PT an die Überwachungseinrichtung 10 ausgebildet ist.

Im Ausführungsbeispiel der Fig. 2 ist beispielhaft ein erstes Feldgerät 4.1, ein zweites Feldgerät 4.2 und ein drittes Feldgerät 4.N vorgesehen. Das erste Feldgerät 4.1 ist mehrkanalig ausgeführt und umfasst sieben Kanäle 9.1 bis 9.7. Jedem der Kanäle 9.1 bis 9.7 ist eine Kanalkennung KK1 bis KK7 zugeordnet. Das zweite Feldgerät 4.2 ist analog aufgebaut. Das dritte Feldgerät 4.N hingegen ist einkanalig aufgebaut, wobei dem Kanal 9 die Kennung KK zugeordnet ist. Zumindest an einige der Kanäle 9, 9.1 bis 9.7 sind nicht gezeigte Aktoren oder Sensoren angeschlossen. Über das industrielle Datenkommunikationsnetzwerk 2 können Prozesstelegramme PT übertragen werden, welche jeweils mindestens einen Signalwert SW, einen dem jeweiligen Signalwert SW zugeordneten Zeitstempel TT und eine dem jeweiligen Signalwert zugeordnete Kanalkennung KK umfassen. Darüber hinaus können über das industrielle Datenkommunikationsnetzwerk 2 Initialisierungstelegramme IT übertragen werden, welche während eines Systemstarts des Automatisierungssystems 1 erforderlich sind.

Handelt es sich bei dem Signalwert SW um einen Messwert SW, so gibt der zugeordnete Zeitstempel ZT an, zu welchem Zeitpunkt der Messwert SW gemessen wurde. Die Kanalkennung KK gibt dabei an, an welchen Kanal 9 der den Messwert SW erfasste Sensor angeschlossen ist. Handelt es sich hingegen bei dem Signalwert SW um einen Steuerwert SW, so gibt der Zeitstempel ZT an, zu welchem Zeitpunkt der Steuerwert SW durch das Prozesssteuergerät 3 ausgegeben wurde. In diesem Fall gibt die Kanalkennung KK an, an welchen Kanal 9 der Steuerwert SW adressiert ist, um einen dort angeschlossenen Aktor zusteuern.

Das industrielle Datenkommunikationsnetzwerk 2 kann ein Industrial Ethernet 2 sein, welches auf den Ebenen 1-2 des ISO-OSI Standards basieren kann. Damit kann es die Ethernet-Übertragungstechnik und das Buszugriffsverfahren des Ethernet-Standards verwenden, Beispiele für Industrial Ethernets 2 sind Profinet, Ethernet/IP oder EtherCAT. Das industrielle Datenkommunikationsnetzwerk 2 kann der Übertragung von Prozesssignalen PS zwischen Feldgeräten 4 und wenigstens einem übergeordneten Prozesssteuergerät 3 dienen. Das Prozesssteuergerät 3 kann insbesondere als speicherprogrammierbares Steuergerät (SPS) 3 ausgebildet sein. Zumindest einige der Feldgeräte 4 können der Messung von Prozessvariablen, wie beispielsweise Temperaturen, Füllständen, Drücken, usw. mittels wenigstens eines Sensors dienen. Dabei sind die Feldgeräte 4 dazu ausgebildet, Prozesssignale PS über das industrielle Datenkommunikationsnetzwerk 2 an das Prozesssteuergerät 3 zu senden, deren Signalwerte SW Messwerte SW der Prozessvariablen sind. Weiterhin ist das Prozesssteuergerät 3 dazu ausgebildet, aus den Messwerten SW der empfangenen Prozesssignale PS Steuerwerte SW abzuleiten und die Steuerwerte SW als Signalwerte SW eines Prozesssignals PS über das industrielle Datenkommunikationsnetzwerk 2 an die Feldgeräte 4 zu senden. Zumindest einige der Feldgeräte 4 sind so ausgebildet, dass sie die Prozessvariablen auf der Basis der Steuerwerte SW der empfangenen Prozesssignale PS beeinflussen können.

In der Regel erfolgt die Steuerung des Prozesses PZ beim industriellen Datenkommunikationsnetzwerk 2 über einen zyklischen Datentransfer zwischen dem Prozesssteuergerät 3 und den Feldgeräten 4. Hierbei tauschen die Feldgeräte 4 in regelmäßigen Abständen Messwerte SW mit dem Prozesssteuergerät 3 aus, die daraus die Steuerwerte z.B. für die entsprechenden Aktoren generiert. Die Kommunikation zwischen Prozesssteuereinheit 3 und Feldgerät 4 erfolgt bei einem industriellen Datenkommunikationsnetzwerk 2 in der Regel zyklisch, wobei das Prozesssteuergerät 3 innerhalb einer festgelegten Zykluszeit die Messsignale PS der einzelnen Feldgeräte 4 empfängt und die Steuersignale an die Feldgeräte sendet. Die Messwerte SW der Feldgeräte 4 sowie die Steuerwerte SW des Prozesssteuergerätes 3 können Informationen über den Zustand des gesteuerten Prozesses PZ bzw. mögliche Prozessfehler liefern. Beispielsweise ist es möglich, Abweichungen der Messwerte SW von Sollwerten zu detektieren (z.B. zu hohe Temperaturen oder Drücke).

Fig. 3 illustriert in schematischer Darstellung ein Ausführungsbeispiel eines Verfahrens zum Betreiben der erfindungsgemäßen Überwachungseinrichtung 10.

In einem weiteren Aspekt schafft die Erfindung ein Verfahren zum Betreiben einer Überwachungseinrichtung 10 zum Überwachen eines Prozesses PZ, welcher mittels eines Automatisierungssystems 1 gesteuert ist, welches ein industrielles Datenkommunikationsnetzwerk 2, ein an das industrielle Datenkommunikationsnetzwerk 2 angeschlossenes Prozesssteuergerät 3 und ein oder mehrere an das industrielle Datenkommunikationsnetzwerk 2 angeschlossene Feldgeräte 4 umfasst, wobei in dem Automatisierungssystem 1 mehrere Prozesssignale PS vorgesehen sind, wobei jedem der Prozesssignale PS ein Signalformat SF und ein Kanal 9 eines der Feldgeräte 4 zugewiesen ist, und wobei für jedes der Prozesssignale PS Signalwerte SW in dem jeweils zugewiesenen Signalformat SF gemeinsam mit einer Kanalkennung KK des jeweiligen Kanals 9 jeweils in einem Prozesstelegramm PT über das industrielle Datenkommunikationsnetzwerk 2 übertragbar ist, mit folgenden Schritten:
automatisches Erstellen einer Prozesssignalbeschreibung PSB durch die Überwachungseinrichtung 10 während einer Konfigurationsphase KP der Überwachungseinrichtung 10 anhand wenigstens eines während einer Initialisierungsphase des industriellen Datenkommunikationsnetzwerks 2 zwischen dem Prozesssteuergerät 3 und wenigstens einem der Feldgeräte übertragenen Initialisierungstelegramms IT für das Automatisierungssystem 1 und anhand von Gerätebeschreibungsdateien GB, welche jeweils einem der Feldgeräte 4 zugeordnet sind, wobei die Prozesssignalbeschreibung PSB für wenigstens eines der Prozesssignale PS das zugehörige Signalformat SF und die zugehörige Kanalkennung KK angibt;
automatisches Erstellen einer Datenbasis DB durch die Überwachungseinrichtung 10 während einer Lernphase LP der Überwachungseinrichtung 10, wobei die Datenbasis DB für wenigstens eines der Prozesssignale PS mehrere Signalwerte SW des jeweiligen Prozesssignals PS umfasst, welche jeweils mit einem Zeitstempel ZT versehen werden, wobei die Signalwerte SW und die zugehörigen Zeitstempel ZT unter Zuhilfenahme der Prozesssignalbeschreibung PSB aus mehreren über das industrielle Datenkommunikationsnetzwerk 2 übertragenen Prozesstelegrammen PT extrahiert werden, wobei für wenigstens eines der Prozesssignale PS aus der Datenbasis DB für die Signalwerte SW des jeweiligen Prozesssignales PS wenigstens ein unzulässiger Wertebereich UW abgeleitet wird; und
automatisches Erkennen einer Störung ST in dem Prozess PZ durch die Überwachungseinrichtung 10 während einer Betriebsphase BP der Überwachungseinrichtung 10, falls ein aktueller Signalwert SW der Signalwerte SW eines der Prozesssignale PS in dem jeweiligen unzulässigen Wertebereich UW liegt, wobei der aktuelle Signalwert SW unter Zuhilfenahme der Prozesssignalbeschreibung PSB aus einem über das industrielle Datenkommunikationsnetzwerk 2 übertragenen aktuellen Prozesstelegramm PT der Prozesstelegramme PT extrahiert wird.

In einem weiteren Aspekt schafft die Erfindung ein Computerprogramm zur Durchführung eines erfindungsgemäßen Verfahrens, wenn es auf einem Computer oder Prozessor ausgeführt wird.

In Fig. 3 ist das Funktionsprinzip der Überwachungseinrichtung 10 dargestellt. Links dargestellt sind die von der Überwachungseinrichtung 10 verarbeiteten Daten. Im Wesentlichen sind das Datenpakete, die vom passiven Lesegerät 11 aus dem industriellen Datenkommunikationsnetzwerk 2 mitgeschnitten werden sowie standardisierte Gerätebeschreibungsdateien GB der einzelnen Feldgeräte 4. Die Überwachungseinrichtung 10 arbeitet in drei Phasen KP, LP, BP und produziert die jeweils unterhalb der Phasen KP, LP, BP dargestellten Ergebnisse PSB, DB, ST. Die Selbstkonfiguration der Überwachungseinrichtung 10 basiert auf dem Mitschneiden von Initialisierungstelegrammen IT beim Systemhochlauf des Automatisierungssystems 1 während einer Konfigurationsphase KP. Aus den Initialisierungstelegrammen IT sowie den standardisierten Gerätebeschreibungsdateien GB werden neben Datentypendefinitionen DT und Namen NP der Prozesssignale PS automatisch die Positionen der Signalwerte SW in den Prozesstelegrammen PT des industriellen Datenkommunikationsnetzwerk s 2 ermittelt. Anschließend extrahiert die die Überwachungseinrichtung 10 unter Verwendung der Prozesssignalbeschreibung PSB in einer Lernphase LP Signalwerte SW des korrekten Prozessverhaltens. Während der Betriebsphase BP der Überwachungseinrichtung 10 wird ein Vergleich neuer Signalwerte SW mit aus der historischen Datenbank DB abgeleiteten unzulässigen Bereichen UW durchgeführt, um so eine Störung ST zu erkennen.

Der Vorteil der vorliegenden Erfindung besteht insbesondere darin, dass sich die erfindungsgemäße Überwachungseinrichtung 10 automatisch selbst konfiguriert. Ein weiterer Vorteil besteht darin, dass sich die erfindungsgemäße Überwachungseinrichtung 10, im Gegensatz zu den existierenden Überwachungsmodulen, selbst konfiguriert, wenn sie in ein beliebiges industrielles Datenkommunikationsnetzwerk 2 eingebracht wird. Nach einer automatischen Konfigurationsphase KP und einer automatischen Lernphase LP beginnt sie, in einer Betriebsphase BP automatisch Störungen ST zu detektieren, ohne dass eine manuelle Konfiguration notwendig ist.

Die Erfindung kann in allen Automatisierungssystemen 1 angewendet werden, die eine Prozessüberwachung erfordern und die darüber hinaus über ein industrielles Datenkommunikationsnetzwerk 2 verfügen. Die beschriebene Überwachungseinrichtung 9 kann in solche Automatisierungssysteme 1 als passiver Netzteilnehmer integriert werden und erkennt nach einer automatischen Konfigurationsphase KP und einer automatischen Lernphase LP in einer Betriebsphase BP automatisch Fehler ST und Anomalien ST im Ablauf des Prozesses PZ.

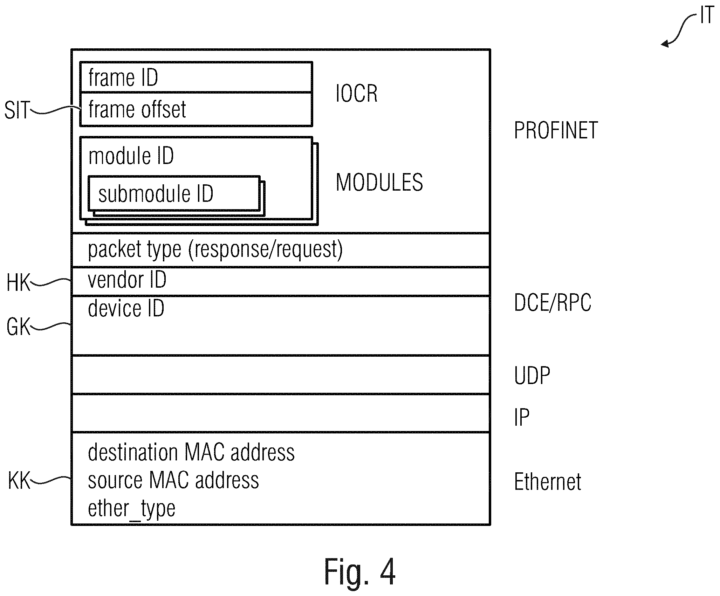

Fig. 4 illustriert in schematischer Darstellung ein beispielhaftes Initialisierungstelegramm IT eines auf einem industriellen Datenkommunikationsnetzwerk 2 basierenden Automatisierungssystems 1.

Nach einer zweckmäßigen Weiterbildung der Erfindung ist die Überwachungseinrichtung 10 für jedes der Feldgeräte 4 zum Auslesen der Kanalkennung KK aus dem wenigstens einen Initialisierungstelegramm IT während der Konfigurationsphase KP ausgebildet.

Nach einer zweckmäßigen Weiterbildung der Erfindung ist die Überwachungseinrichtung 10 für jedes der Feldgeräte 4 zum Auslesen einer Herstellerkennung HK und/oder einer Gerätetypkennung GK aus dem wenigstens einen Initialisierungstelegramm IT während der Konfigurationsphase KP ausgebildet.

Gemäß einer zweckmäßigen Weiterbildung der Erfindung ist die Überwachungseinrichtung 10 für jedes der Feldgeräte 4 zum Auswählen der zugehörigen Gerätebeschreibungsdatei GB anhand der Herstellerkennung HK und/oder der Gerätetypkennung GK ausgebildet.

Bei dem in Fig. 4 gezeigten Initialisierungstelegramm IT handelt es sich beispielhaft um einen Profinet Connect Frame.

Fig. 5 illustriert in schematischer Darstellung eine beispielhafte Gerätebeschreibungsdatei GB eines Feldgerätes 4 für ein auf einem industriellen Datenkommunikationsnetzwerk 2 basierendes Automatisierungssystem 1 sowie ein beispielhaftes Prozesstelegrammen PT eines auf einem industriellen Datenkommunikationsnetzwerk 2 basierenden Automatisierungssystems 1.

Nach einer zweckmäßigen Weiterbildung der Erfindung sind die Gerätebeschreibungsdateien GB in der Überwachungseinrichtung 10 hinterlegt.

Nach einer vorteilhaften Weiterbildung der Erfindung umfasst das Signalformat SF eines der Prozesssignale PS eine erste Startinformation SIG für die Signalwerte SW in den jeweiligen Prozesstelegrammen PT, wobei die Überwachungseinrichtung 10 für jedes der Prozesssignale PS zum Auslesen der ersten Startinformation SIG aus der Gerätebeschreibungsdatei GB desjenigen Feldgerätes 4, welches mit der zum jeweiligen Prozesssignal gehörigen Kanalkennung KK korrespondiert, ausgebildet ist.

Gemäß einer vorteilhaften Weiterbildung der Erfindung umfasst das Signalformat SF eines der Prozesssignale PS eine zweite Startinformation SIT für die Signalwerte SW in den jeweiligen Prozesstelegrammen PT, wobei die Überwachungseinrichtung 10 für jedes der Prozesssignale PS zum Auslesen der zweiten Startinformation SIT aus dem wenigstens einen Initialisierungstelegramm während der Konfigurationsphase KP ausgebildet ist.

Gemäß einer zweckmäßigen Weiterbildung der Erfindung umfasst das Signalformat SF eines der Prozesssignale PS eine Datentypdefinition DT für die Signalwerte SW in den jeweiligen Prozesstelegrammen PT, wobei die Überwachungseinrichtung 10 für jedes der Prozesssignale PS zum Auslesen der Datentypdefinition DT aus der Gerätebeschreibungsdatei GB desjenigen Feldgerätes 4, welches mit der zum jeweiligen Prozesssignal PS gehörigen Kanalkennung KK korrespondiert, während der Konfigurationsphase KP ausgebildet ist.

Nach einer zweckmäßigen Weiterbildung der Erfindung umfasst das Signalformat SF eines der Prozesssignale PS eine Datenlängendefinition DL für die Signalwerte SW in den jeweiligen Prozesstelegrammen PT, wobei die Überwachungseinrichtung 10 für jedes der Prozesssignale PS zum Auslesen der Datenlängendefinition DL aus der Gerätebeschreibungsdatei GB desjenigen Feldgerätes 4, welches mit der zum jeweiligen Prozesssignal PS gehörigen Kanalkennung KK korrespondiert, während der Konfigurationsphase KP ausgebildet ist.

Gemäß einer zweckmäßigen Weiterbildung der Erfindung ist die Überwachungseinrichtung 10 zum Auslesen von Namen der Feldgeräte 4 aus dem wenigstens einen Initialisierungstelegramm IT während der Konfigurationsphase KP ausgebildet, wobei die Überwachungseinrichtung 10 zur Ausgabe eines Datensatzes ausgebildet ist, der wenigstens einen der Signalwerte SW eines der Prozesssignale PS und den Namen des dem jeweiligen Prozesssignal PS zugeordneten Feldgerätes 4 umfasst.

Nach einer zweckmäßigen Weiterbildung der Erfindung ist die Überwachungseinrichtung 10 zum Auslesen von Namen NP der Prozesssignale PS aus der Gerätebeschreibungsdatei GB desjenigen Feldgerätes 4, welches mit der zum jeweiligen Prozesssignal PS gehörigen Kanalkennung KK korrespondiert, während der Konfigurationsphase KP ausgebildet, wobei die Überwachungseinrichtung 10 zur Ausgabe eines Datensatzes ausgebildet ist, der wenigstens einen der Signalwerte SW eines der Prozesssignale PS und den Namen NP des jeweiligen Prozesssignals PS umfasst.

Gemäß einer zweckmäßigen Weiterbildung der Erfindung ist die Überwachungseinrichtung 10 zum Auslesen von Namen der Feldgeräte 4 aus dem wenigstens einen Initialisierungstelegramm IT während der Konfigurationsphase KP ausgebildet, wobei die Überwachungseinrichtung 10 zum Auslesen von Namen NP der Prozesssignale PS aus der Gerätebeschreibungsdatei GB desjenigen Feldgerätes 4, welches mit der zum jeweiligen Prozesssignal PS gehörigen Kanalkennung KK korrespondiert, während der Konfigurationsphase KP ausgebildet ist, und wobei die Überwachungseinrichtung 10 zur Ausgabe eines Datensatzes ausgebildet ist, der wenigstens einen der Signalwerte SW eines der Prozesssignale PS, den Namen NP des jeweiligen Prozesssignals PS und den Namen des dem jeweiligen Prozesssignal PS zugeordneten Feldgerätes 4 umfasst.

Gemäß einer zweckmäßigen Weiterbildung der Erfindung umfasst der Datensatz die Kanalkennung KK des dem jeweiligen Prozesssignal PS zugeordneten Kanals 9.

Bei dem in Fig. 5 gezeigten Prozesstelegrammen PT handelt es sich beispielhaft um einen Profinet Frame.

Fig. 6 illustriert in schematischer Darstellung eine beispielhafte Prozesssignalbeschreibung PSB einer erfindungsgemäßen Überwachungseinrichtung 10. dabei ist eine Prozesssignalbeschreibung PSB gezeigt, welche beispielhaft die Prozesssignale PS1 und PS2 beschreibt. So ist das Prozesssignal PS1 durch das Signalformat SF1 und durch die Kanalkennung KK 1 beschrieben. Weiterhin ist das Prozesssignal PS2 durch das Signalformat SF2 und durch die Kanaltrennung KK2 beschrieben.

Fig. 7 illustriert in schematischer Darstellung eine Lernphase LP sowie eine Betriebsphase BP einer erfindungsgemäßen Überwachungseinrichtung 10.

Im Folgenden wird die Funktionsweise der Überwachungseinrichtung 10 ohne Beschränkung der Allgemeinheit an einem Beispiel erklärt, bei dem das industrielle Datenkommunikationsnetzwerk 2 ein Industrial Ethernet 2, nämlich ein Profinet 2 ist.

In einem ersten Schritt der Konfigurationsphase KP können die Namen der Feldgeräte 4 im Profinet 2 aus ersten Initialisierungstelegrammen IT, nämlich aus sogenannten Profinet Frames IT, extrahiert werden, die beim Systemhochlauf des Profinet 2 mitgeschnitten werden können.

In einem zweiten Schritt der Konfigurationsphase KP können zweite Initialisierungstelegramme IT, nämlich so genannte Profinet Connect Frames IT, analysiert werden. Für jedes Feldgerät 4 kann beim Systemhochlauf des Profinet 2 ein 2. Initialisierungstelegramm IT (d.h. ein Datenpaket, das Informationen zum Verbindungsaufbau enthält) mitgeschnitten werden. Die extrahierten Informationen auf verschiedenen Ebenen des Profinet Protokoll-Stacks (d.h. in verschiedenen Abschnitten des Datenpaketes) sind in Fig. 4 dargestellt. Die Telegrammidentifikation (Frame ID) und die zweite Startinformation SIT (Frame Offsets) können in der Lernphase LP und Betriebsphase BP zur Identifikation von Signalwerten SW verwendet werden. Die Herstellerkennung HK (Vendor ID) und die Gerätetypkennung GK (Device ID) können zur eindeutigen Identifikation einer Gerätebeschreibungsdatei GB (GSDML-Datei) für das jeweilige Feldgerät 4 dienen. Die extrahierten Modulnamen (Module ID) und Submodulnamen (Submodule ID) können dazu verwendet werden, die Kanalkennungen KK der Feldgeräte 4 zu ermitteln, so dass die Prozesssignale PS den Kanälen 9 der Feldgeräte 4 zugeordnet werden können. Die Kanalkennungen KK können als MAC-Adressen vorliegen.

In einem dritten Schritt der Konfigurationsphase KP können die Gerätebeschreibungsdateien GB für die Feldgeräte 4 analysiert werden. Dabei können die erforderlichen Gerätebeschreibungsdateien GB anhand der zuvor ermittelten Herstellerkennung HK und/oder anhand der Gerätetypkennung GK eindeutig identifiziert werden. Die Beschreibungen der Prozesssignale PS, welche in der Lernphase LP und in der Betriebsphase BP ausgewertet werden sollen, können über die extrahierten Modulnamen (Module ID) und Submodulnamen (Submodule ID) identifiziert werden. Insbesondere können die Beschreibungen für jedes der Prozesssignale PS der jeweilige Namen NP und die Datentypdefinition DT, die Datenlängendefinition DL und die erste Startinformation SIG für die Signalwerte SW aus den Gerätebeschreibungsdateien GB ermittelt werden.

Die erste Startinformation SIG wird zur Berechnung der exakten Positionen der Signalwerte SW der einzelnen Prozesssignale PS im Abschnitt für die Signalwerte SW im Prozesstelegramm PT benötigt. Die aus den zweiten Initialisierungstelegrammen IT extrahierten zweiten Startinformationen SIT geben nur den Beginn des Abschnitts für die Signalwerte SW in einem zyklischen PROFINET-Datenpaket an. Die erste Startinformation SIG und die zweite Startinformation SIT werden also aufaddiert, um die exakte Startposition der Signalwerte SW in dem Prozesstelegramm PT zu ermitteln.

In der Lernphase LP und in der Betriebsphase BP werden einzelne Signalwerte SW aus zyklischen Prozesstelegrammen PT extrahiert (d.h. aus PROFINET-Datenpaketen, die regelmäßig ca. alle 10ms übertragen werden). Die relevanten Prozesstelegramme PT werden über die Telegrammidentifikation eindeutig identifiziert. Die Position eines Signalwerts SW im Prozesstelegramm PT ergibt sich aus der ersten Positionsinformation SIG und der zweiten Positionsinformation SIT. Aus den Namen der Feldgeräte (im ersten Schritt der Konfigurationsphase KP extrahiert) sowie den Modulnamen (Module ID) und Submodulnamen (Submodule ID) und Namen NP der Prozesssignale PS (aus dem dritten Schritt der Konfigurationsphase KP) können aussagenkräftige Datensätze zur Beschreibung der Prozesssignale PS gebildet werden, die z.B. beim Loggen von Sensorsignalen verwendet werden können. Die Datensätze können insbesondere auch in der Betriebsphase BP bei der Ausgabe von Fehlern verwendet werden. Die Datentypen, die Informationen, ob Signalwerte SW ggf. als Bitfelder interpretiert werden sollen, und die Informationen über die Anzahl der Bytes, die zur Darstellung eines Signalwertes SW im PROFINET-Frame verwendet werden, können für die richtige Interpretation des Prozesssignals PS als Zahlenwert verwendet werden.

Das prinzipielle Vorgehen in der Lernphase LP und der Betriebsphase BP ist in Figur 7 dargestellt. Um großen manuellen Konfigurationsaufwand zu vermeiden, werden Modelle des normalen Prozessverhaltens in der Lernphase LP automatisch aus den extrahierten und mit Zeitstempeln versehenen (d.h. zeitlich synchronisierten) Signalwerten SW (Messwerte oder Steuerwerte) gelernt. Die gelernten Prozessmodelle sollen Abhängigkeiten und das Zeitverhalten der Signalwerte SW verschiedener Prozesssignale PS berücksichtigen. Im einfachsten Fall werden für jedes einzelne Prozesssignal eine untere und eine obere Schranke für die jeweiligen Signalwerte SW festgelegt, die den zulässigen Betriebsbereich für die Signalwerte SW beschreiben. In der Betriebsphase BP werden signifikante Abweichungen der extrahierten Signalwerte SW von den Prozessmodellen detektiert und als potentielle Anomalien angezeigt. Für das skizzierte Modell werden somit Anomalien bei signifikanter Unter- oder Überschreitung der gelernten Schranken angenommen. Das skizzierte Vorgehen ist insbesondere für zyklische Prozessabläufe geeignet, da in der Lernphase LP das Normalverhalten des Prozesses PZ gelernt werden kann. Bei solchen zyklischen Prozessabläufen lassen sich die Abweichungen vom Normalverhalten als Indikatoren für einen Prozessfehler deuten.

In der Praxis können in der Überwachungseinrichtung 10 Prozessmodelle oder in der Wissensbasis komplexere Regeln als einfache Schranken für die Signalwerte SW verwendet werden, da beispielsweise auch Abhängigkeiten zwischen den einzelnen Prozesssignalen PS und zeitliche Abhängigkeiten in den Prozesssignalen PS zur Fehlererkennung ausgenutzt werden können.

Je nach bestimmten Implementierungsanforderungen können Ausführungsbeispiele der erfindungsgemäßen Vorrichtung zumindest teilweise in Hardware oder zumindest teilweise in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können, dass eine oder mehrere oder alle der funktionalen Elemente der erfindungsgemäßen Vorrichtung realisiert werden.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Vorrichtung durchzuführen. Bei manchen Ausführungsbeispielen kann ein feldprogrammierbares Gatterarray mit einem Mikroprozessor zusammenwirken, um eine der hierin beschriebenen Vorrichtungen zu realisieren.

Je nach bestimmten Implementierungsanforderungen können Ausführungsbeispiele des erfindungsgemäßen Verfahrens mittels einer Vorrichtung durchgeführt werden, welche zumindest teilweise in Hardware oder zumindest teilweise in Software implementiert ist. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können, dass das erfindungsgemäße Verfahren durchgeführt wird.

Aspekte der Erfindung, welche hierin im Kontext der erfindungsgemäßen Vorrichtung beschrieben sind, repräsentieren ebenso Aspekte des erfindungsgemäßen Verfahrens. Umgekehrt repräsentieren solche Aspekte der Erfindung, welche hierin im Kontext des erfindungsgemäßen Verfahrens beschrieben sind, ebenso Aspekte der erfindungsgemäßen Vorrichtung.

Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC,

Ein weiteres Ausführungsbeispiel umfasst einen Computer, auf dem das Computerprogramm zum Durchführen eines der hierin beschriebenen Verfahren installiert ist.

Allgemein können Ausführungsbeispiele der vorliegenden Erfindung als Computerprogramm mit einem Programmcode implementiert sein, wobei der Programmcode dahin gehend wirksam ist, eines der Verfahren durchzuführen, wenn das Computerprogramm auf einem Computer abläuft. Der Programmcode kann beispielsweise auch auf einem maschinenlesbaren Träger gespeichert sein.

Manche Ausführungsbeispiele der Erfindung umfassen einen, vorzugsweise nicht-flüchtigen Datenträger oder Datenspeicher, der ein Computerprogramm mit elektronisch lesbaren Steuersignalen aufweist, welches in der Lage ist, mit einem programmierbaren Computersystem derart zusammenzuwirken, dass eines der hierin beschriebenen Verfahren durchgeführt wird.

Ausführungsbeispiele der vorliegenden Erfindung können als Computerprogrammprodukt mit einem Computerprogramm implementiert sein, wobei das Computerprogramm dahin gehend wirksam ist, eines der Verfahren durchzuführen, wenn das Computerprogramm auf einem Computer abläuft.

### Bezugszeichen:

- 1: Automatisierungssystem
- 2: industrielles Datenkommunikationsnetzwerk
- 3: Prozesssteuergerät
- 4: Feldgerät
- 5: Überwachungsrechner
- 6: Überwachungsmodul eines Feldgerätes
- 7: Überwachungsmodul eines Prozesssteuergerätes
- 8: Überwachungsmodul eines Überwachungsrechners
- 9: Kanal eines Feldgerätes
- 10: Überwachungseinrichtung
- 11: passives Lesegerät

- BP: Betriebsphase
- DB: Datenbasis
- DL: Datenlängendefinition
- DT: Datentypdefinition
- GB: Gerätebeschreibungsdatei
- GK: Gerätetypkennung
- HK: Herstellerkennung
- IT: Initialisierungstelegramm
- KK: Kanalkennung
- KP: Konfigurationsphase
- LP: Lernphase
- NP: Name eines Prozesssignales
- PM: Prozessmodel
- PS: Prozesssignal
- PSB: Prozesssignalbeschreibung
- PT: Prozesstelegramm
- PZ: Prozess
- SF: Signalformat
- SIG: erste Startinformation
- SIT: zweite Startinformation
- ST: Störung
- SW: Signalwert
- UW: unzulässiger Wertebereich
- ZT: Zeitstempel

### Quellen:

[1] WO 2007/074105 A2
[2] DE 10252278 A1
[3] US 7,231,483 B2
[4] F. Pethig, B. Kroll, O. Niggemann, A. Maier, T. Tack, and M. Maag, "A generic synchronized data acquisition solution for distributed automation systems," in 17th IEEE International Conference on Emerging Technologies and Factory Automation, 2012
[5] J. Eickmeyer, P. Li, O. Givehchi, and O. Niggemann, "Data driven modeling for system-level condition monitoring on wind power plants," In: The 26th International Workshop on Principles of Diagnosis (DX-2015), 2015

## Patentansprüche

1. Überwachungseinrichtung zum Überwachen eines Prozesses (PZ), welcher mittels eines Automatisierungssystems (1) gesteuert ist, welches ein industrielles Datenkommunikationsnetzwerk (2), ein an das industrielle Datenkommunikationsnetzwerk (2) angeschlossenes Prozesssteuergerät (3) und ein oder mehrere an das industrielle Datenkommunikationsnetzwerk (2) angeschlossene Feldgeräte (4) umfasst, wobei in dem Automatisierungssystem (1) mehrere Prozesssignale (PS) vorgesehen sind, wobei jedem der Prozesssignale (PS) ein Signalformat (SF) und ein Kanal (9) eines der Feldgeräte (4) zugewiesen ist, und wobei für jedes der Prozesssignale (PS) Signalwerte (SW) in dem jeweils zugewiesenen Signalformat (SF) gemeinsam mit einer Kanalkennung (KK) des jeweiligen Kanals (9) jeweils in einem Prozesstelegramm (PT) über das industrielle Datenkommunikationsnetzwerk (2) übertragbar sind,
wobei die Überwachungseinrichtung (10) zum automatischen Erstellen einer Prozesssignalbeschreibung (PSB) während einer Konfigurationsphase (KP) der Überwachungseinrichtung (10) anhand wenigstens eines während einer Initialisierungsphase des industriellen Datenkommunikationsnetzwerks (2) zwischen dem Prozesssteuergerät (3) und wenigstens einem der Feldgeräte (4) übertragenen Initialisierungstelegramms (IT) für das Automatisierungssystem (1) und anhand von Gerätebeschreibungsdateien (GB), welche jeweils einem der Feldgeräte (4) zugeordnet sind, ausgebildet ist, wobei die Prozesssignalbeschreibung (PSB) für wenigstens eines der Prozesssignale (PS) das zugehörige Signalformat (SF) und die zugehörige Kanalkennung (KK) angibt,
wobei die Überwachungseinrichtung (10) zum automatischen Erstellen einer Datenbasis (DB) während einer Lernphase (LP) der Überwachungseinrichtung (10) ausgebildet ist, wobei die Datenbasis (DB) für wenigstens eines der Prozesssignale (PS) mehrere Signalwerte (SW) des jeweiligen Prozesssignals (PS) umfasst, welche jeweils mit einem Zeitstempel (ZT) versehen sind, wobei die Signalwerte (SW) und die zugehörigen Zeitstempel (ZT) unter Zuhilfenahme der Prozesssignalbeschreibung (PSB) aus mehreren über das industrielle Datenkommunikationsnetzwerk (2) übertragenen Prozesstelegrammen (PT) extrahiert sind, wobei für wenigstens eines der Prozesssignale (PS) aus der Datenbasis (DB) für die Signalwerte (SW) des jeweiligen Prozesssignales (PS) wenigstens ein unzulässiger Wertebereich (UW) abgeleitet ist, und
wobei die Überwachungseinrichtung (10) zum automatischen Erkennen einer Störung (ST) in dem Prozess (PZ) während einer Betriebsphase (BP) der Überwachungseinrichtung (10) ausgebildet ist, falls ein aktueller Signalwert (SW) der Signalwerte (SW) eines der Prozesssignale (PS) in dem jeweiligen unzulässigen Wertebereich (UW) liegt, wobei der aktuelle Signalwert (SW) unter Zuhilfenahme der Prozesssignalbeschreibung (PSB) aus einem über das industrielle Datenkommunikationsnetzwerk (2) übertragenen aktuellen Prozesstelegramm (PT) der Prozesstelegramme (PT) extrahiert ist.

2. Überwachungseinrichtung nach vorstehendem Anspruch, wobei die Prozesssignale (PS), für die jeweils mindestens ein unzulässiger Wertebereich (UW) abgeleitet ist, wenigstens ein Messsignal eines Sensors, der an einen der Kanäle (9) eines der Feldgeräte (4) angeschlossen ist, und/oder wenigstens ein Steuersignal für einen Aktor, der an einen der Kanäle (9) eines der Feldgeräte (4) angeschlossenen ist, umfassen.

3. Überwachungseinrichtung nach einem der vorstehenden Ansprüche, wobei die Überwachungseinrichtung (10) für jedes der Feldgeräte (4) zum Auslesen einer Herstellerkennung (HK) und/oder einer Gerätetypkennung (GK) aus dem wenigstens einen Initialisierungstelegramm (IT) während der Konfigurationsphase (KP) ausgebildet ist, wobei die Überwachungseinrichtung (10) für jedes der Feldgeräte (4) zum Auswählen der zugehörigen Gerätebeschreibungsdatei (GB) anhand der Herstellerkennung (HK) und/oder der Gerätetypkennung (GK) ausgebildet ist.

4. Überwachungseinrichtung nach einem der vorstehenden Ansprüche, wobei die Überwachungseinrichtung (10) für jedes der Feldgeräte (4) zum Auslesen der Kanalkennung (KK) aus dem wenigstens einen Initialisierungstelegramm (IT) während der Konfigurationsphase (KP) ausgebildet ist.

5. Überwachungseinrichtung nach einem der vorstehenden Ansprüche, wobei das Signalformat (SF) eines der Prozesssignale (PS) eine erste Startinformation (SIG) für die Signalwerte (SW) in den jeweiligen Prozesstelegrammen (PT) umfasst, wobei die Überwachungseinrichtung (10) für jedes der Prozesssignale (PS) zum Auslesen der ersten Startinformation (SIG) aus der Gerätebeschreibungsdatei (GB) desjenigen Feldgerätes (4), welches mit der zum jeweiligen Prozesssignal gehörigen Kanalkennung (KK) korrespondiert, ausgebildet ist.

6. Überwachungseinrichtung nach einem der vorstehenden Ansprüche, wobei das Signalformat (SF) eines der Prozesssignale (PS eine zweite Startinformation (SIT) für die Signalwerte (SW) in den jeweiligen Prozesstelegrammen (PT) umfasst, wobei die Überwachungseinrichtung (10) für jedes der Prozesssignale (PS) zum Auslesen der zweiten Startinformation (SIT) aus dem wenigstens einen Initialisierungstelegramm (IT) während der Konfigurationsphase (KP) ausgebildet ist.

7. Überwachungseinrichtung nach einem der vorstehenden Ansprüche, wobei das Signalformat (SF) eines der Prozesssignale (PS) eine Datentypdefinition (DT) für die Signalwerte (SW) in den jeweiligen Prozesstelegrammen (PT) umfasst, wobei die Überwachungseinrichtung (10) für jedes der Prozesssignale (PS) zum Auslesen der Datentypdefinition (DT) aus der Gerätebeschreibungsdatei (GB) desjenigen Feldgerätes (4), welches mit der zum jeweiligen Prozesssignal (PS) gehörigen Kanalkennung (KK) korrespondiert, während der Konfigurationsphase (KP) ausgebildet ist.

8. Überwachungseinrichtung nach einem der vorstehenden Ansprüche, wobei das Signalformat (SF) eines der Prozesssignale (PS) eine Datenlängendefinition (DL) für die Signalwerte (SW) in den jeweiligen Prozesstelegrammen (PT) umfasst, wobei die Überwachungseinrichtung (10) für jedes der Prozesssignale (PS) zum Auslesen der Datenlängendefinition (DL) aus der Gerätebeschreibungsdatei (GB) desjenigen Feldgerätes (4), welches mit der zum jeweiligen Prozesssignal (PS) gehörigen Kanalkennung (KK) korrespondiert, während der Konfigurationsphase (KP) ausgebildet ist.

9. Überwachungseinrichtung nach einem der vorstehenden Ansprüche, wobei die Überwachungseinrichtung (10) zum Auslesen von Namen der Feldgeräte (4) aus dem wenigstens einen Initialisierungstelegramm (IT) während der Konfigurationsphase (KP) ausgebildet ist und wobei die Überwachungseinrichtung (10) zur Ausgabe eines Datensatzes ausgebildet ist, der wenigstens einen der Signalwerte (SW) eines der Prozesssignale (PS) und den Namen des dem jeweiligen Prozesssignal (PS) zugeordneten Feldgerätes (4) umfasst.

10. Überwachungseinrichtung nach einem der Ansprüche 1 bis 8, wobei die Überwachungseinrichtung (10) zum Auslesen von Namen (NP) der Prozesssignale (PS) aus der Gerätebeschreibungsdatei (GB) desjenigen Feldgerätes (4), welches mit der zum jeweiligen Prozesssignal (PS) gehörigen Kanalkennung (KK) korrespondiert, während der Konfigurationsphase (KP) ausgebildet ist und wobei die Überwachungseinrichtung (10) zur Ausgabe eines Datensatzes ausgebildet ist, der wenigstens einen der Signalwerte (SW) eines der Prozesssignale (PS) und den Namen (NP) des jeweiligen Prozesssignals (PS) umfasst.

11. Überwachungseinrichtung nach einem der Ansprüche 1 bis 8, wobei die Überwachungseinrichtung (10) zum Auslesen von Namen der Feldgeräte (4) aus dem wenigstens einen Initialisierungstelegramm (IT) während der Konfigurationsphase (KP) ausgebildet ist, wobei die Überwachungseinrichtung (10) zum Auslesen von Namen (NP) der Prozesssignale (PS) aus der Gerätebeschreibungsdatei (GB) desjenigen Feldgerätes (4), welches mit der zum jeweiligen Prozesssignal (PS) gehörigen Kanalkennung (KK) korrespondiert, während der Konfigurationsphase (KP) ausgebildet ist, und wobei die Überwachungseinrichtung (10) zur Ausgabe eines Datensatzes ausgebildet ist, der wenigstens einen der Signalwerte (SW) eines der Prozesssignale (PS), den Namen (NP) des jeweiligen Prozesssignals (PS) und den Namen des dem jeweiligen Prozesssignal (PS) zugeordneten Feldgerätes (4) umfasst.

12. Überwachungseinrichtung nach einem der vorstehenden Ansprüche, wobei der unzulässige Wertebereich (UW) für die Signalwerte (SW) eines der Prozesssignale (PS) mittels einer aus der Datenbasis (DB) gewonnenen Wissensbasis oder mittels eines aus der Datenbasis gewonnenen Prozessmodells abgeleitet ist.

13. Überwachungseinrichtungssystem zum Überwachen eines Prozesses (PZ), welcher mittels eines Automatisierungssystems (1) gesteuert ist, welches ein industrielles Datenkommunikationsnetzwerk (2), ein an das industrielle Datenkommunikationsnetzwerk (2) angeschlossenes Prozesssteuergerät (3) und ein oder mehrere an das industrielle Datenkommunikationsnetzwerk (2) angeschlossene Feldgeräte (4) umfasst, wobei das Überwachungseinrichtungssystem umfasst:
eine Überwachungseinrichtung (10) nach einem der Ansprüche 1- 12 und
ein passives Lesegerät (11), welches zum Auslesen von wenigstens einem über das industrielle Datenkommunikationsnetzwerk (2) übertragenen Initialisierungstelegramm (IT) und zum Auslesen von Prozesstelegrammen (PT) ausgebildet ist und welches zum Senden des wenigstens einen Initialisierungstelegramms (IT) und der Prozesstelegramme (PT) an die Überwachungseinrichtung (10) ausgebildet ist.

14. Verfahren zum Betreiben einer Überwachungseinrichtung (10) zum Überwachen eines Prozesses (PZ), welcher mittels eines Automatisierungssystems (1) gesteuert ist, welches ein industrielles Datenkommunikationsnetzwerk (2), ein an das industrielle Datenkommunikationsnetzwerk (2) angeschlossenes Prozesssteuergerät (3) und ein oder mehrere an das industrielle Datenkommunikationsnetzwerk (2) angeschlossene Feldgeräte (4) umfasst, wobei in dem Automatisierungssystem (1) mehrere Prozesssignale (PS) vorgesehen sind, wobei jedem der Prozesssignale (PS) ein Signalformat (SF) und ein Kanal (9) eines der Feldgeräte (4) zugewiesen ist, und wobei für jedes der Prozesssignale (PS) Signalwerte (SW) in dem jeweils zugewiesenen Signalformat (SF) gemeinsam mit einer Kanalkennung (KK) des jeweiligen Kanals (9) jeweils in einem Prozesstelegramm (PT) über das industrielle Datenkommunikationsnetzwerk (2) übertragbar ist, mit folgenden Schritten:
automatisches Erstellen einer Prozesssignalbeschreibung (PSB) durch die Überwachungseinrichtung (10) während einer Konfigurationsphase (KP) der Überwachungseinrichtung (10) anhand wenigstens eines während einer Initialisierungsphase des industriellen Datenkommunikationsnetzwerks (2) zwischen dem Prozesssteuergerät (3) und wenigstens einem der Feldgeräte übertragenen Initialisierungstelegramms (IT) für das Automatisierungssystem (1) und anhand von Gerätebeschreibungsdateien (GB), welche jeweils einem der Feldgeräte (4) zugeordnet sind, wobei die Prozesssignalbeschreibung (PSB) für wenigstens eines der Prozesssignale (PS) das zugehörige Signalformat (SF) und die zugehörige Kanalkennung (KK) angibt;
automatisches Erstellen einer Datenbasis (DB) durch die Überwachungseinrichtung (10) während einer Lernphase (LP) der Überwachungseinrichtung (10), wobei die Datenbasis (DB) für wenigstens eines der Prozesssignale (PS) mehrere Signalwerte (SW) des jeweiligen Prozesssignals (PS) umfasst, welche jeweils mit einem Zeitstempel (ZT) versehen werden, wobei die Signalwerte (SW) und die zugehörigen Zeitstempel (ZT) unter Zuhilfenahme der Prozesssignalbeschreibung (PSB) aus mehreren über das industrielle Datenkommunikationsnetzwerk (2) übertragenen Prozesstelegrammen (PT) extrahiert werden, wobei für wenigstens eines der Prozesssignale (PS) aus der Datenbasis (DB) für die Signalwerte (SW) des jeweiligen Prozesssignales (PS) wenigstens ein unzulässiger Wertebereich (UW) abgeleitet wird; und
automatisches Erkennen einer Störung (ST) in dem Prozess (PZ) durch die Überwachungseinrichtung (10) während einer Betriebsphase (BP) der Überwachungseinrichtung (10), falls ein aktueller Signalwert (SW) der Signalwerte (SW) eines der Prozesssignale (PS) in dem jeweiligen unzulässigen Wertebereich (UW) liegt, wobei der aktuelle Signalwert (SW) unter Zuhilfenahme der Prozesssignalbeschreibung (PSB) aus einem über das industrielle Datenkommunikationsnetzwerk (2) übertragenen aktuellen Prozesstelegramm (PT) der Prozesstelegramme (PT) extrahiert wird.

15. Computerprogramm zur Durchführung eines Verfahrens gemäß dem vorstehenden Anspruch, wenn es auf einem Computer oder Prozessor ausgeführt wird.

## Claims

1. Monitoring means for monitoring a process (PZ) controlled by means of an automation system (1) comprising an industrial data communication network (2), a process controller (3) connected to the industrial data communication network (2), and one or more field devices (4) connected to the industrial data communication network (2), wherein several process signals (PS) are provided in the automation system (1), wherein a signal format (SF) and a channel (9) of one of the field devices (4) are associated to each of the process signals (PS), and wherein, for each of the process signals (PS), signal values (SW) in the respectively associated signal format (SF), together with a channel identification (KK) of the respective channel (9) can each be transmitted via the industrial data communication network (2) in a process telegram (PT),
wherein the monitoring means (10) is configured for automatically creating a process signal description (PSB) during a configuration phase (KP) of the monitoring means (10) using at least one initializing telegram (IT) for the automation system transmitted during an initialization phase of the industrial data communication network (2) between the process controller (3) and at least one of the field devices (4),and using device description files (GB) associated each to one of the field devices (4), wherein the process signal description (PSB) indicates, for at least one of the process signals (PS), the respective signal format (SF) and the respective channel identification (KK),
wherein the monitoring means (10) is configured for automatically creating a data base (DB) during a learning phase (LP) of the monitoring means (10), wherein the data base (DB), for at least one of the process signals (PS), comprises several signal values (SW) of the respective process signals (PS), which are each provided with a time stamp (ZT), wherein the signal values (SW) and the respective time stamps (ZT) are extracted from several process telegrams (PT) transmitted via the industrial data communication network (2) using the process signal description (PSB), wherein at least one illegal range of values (UW) is derived for at least one of the process signals (PS) from the data base (DB) for the signal values (SW) of the respective process signal (PS), and
wherein the monitoring means (10) is configured for automatically identifying a disturbance (ST) in the process (PZ) during an operation phase (BP) of the monitoring means (10), in case a current signal value (SW) of the signal values (SW) of one of the process signals (PS) is within the respective illegal range of values (UW), wherein the current signal value (SW) is extracted from a current process telegram (PT) of the process telegrams (PT) transmitted via the industrial data communication network (2) using the process signal description (PSB).

2. The monitoring means in accordance with the preceding claim, wherein the process signals (PS) for each of which at least one illegal range of values (UW) is derived, comprise at least one measurement signal of a sensor connected to one of the channels (9) of one of the field devices (4), and/or at least one control signal for an actuator connected to one of the channels (9) of one of the field devices (4).

3. The monitoring means in accordance with any of the preceding claims, the monitoring means (10) being, for each of the field devices (4), configured for reading out a manufacturer identification (HK) and/or a device type identification (GK) from the at least one initialization telegram (IT) during the configuration phase (KP), wherein the monitoring means (10) is, for each of the field devices (4), configured for selecting the respective device description file (GB) using the manufacturer identification (HK) and/or the device type identification (GK).

4. The monitoring means in accordance with any of the preceding claims, the monitoring means (10) being, for each of the field devices (4), configured for reading out the channel identification (KK) from the at least one initialization telegram (IT) during the configuration phase (KP).

5. The monitoring means in accordance with any of the preceding claims, wherein the signal format (SF) of one of the process signals (PS) comprises first start information (SIG) for the signal values (SW) in the respective process telegrams (PT), wherein the monitoring means (10) is, for each of the process signals (PS), configured for reading out the first start information (SIG) from the device description file (GB) of that field device (4) which corresponds to the channel identification (KK) belonging to the respective process signal.

6. The monitoring means in accordance with any of the preceding claims, wherein the signal format (SF) of one of the process signals (PS) comprises second start information (SIT) for the signal values (SW) in the respective process telegrams (PT), wherein the monitoring means (10) is, for each of the process signals (PS), configured for reading out the second start information (SIT) from the at least one initialization telegram (IT) during the configuration phase (KP).

7. The monitoring means in accordance with any of the preceding claims, wherein the signal format (SF) of one of the process signals (PS) comprises a data type definition (DT) for the signal values (SW) in the respective process telegrams (PT), wherein the monitoring means (10) is, for each of the process signals (PS), configured for reading out the data type definition (DT) from the device description file (GB) of that field device (4) which corresponds to the channel identification (KK) belonging to the respective process signal (PS), during the configuration phase (KP).

8. The monitoring means in accordance with any of the preceding claims, wherein the signal format (SF) of one of the process signals (PS) comprises a data length definition (DL) for the signal values (SW) in the respective process telegrams (PT), wherein the monitoring means (10) is, for each of the process signals (PS), configured for reading out the data length definition (DL) from the device description file (GB) of that field device (4) which corresponds to the channel identification (KK) belonging to the respective process signal (PS), during the configuration phase (KP).

9. The monitoring means in accordance with any of the preceding claims, the monitoring means (10) being configured for reading out names of the field devices (4) from the at least one initialization telegram (IT) during the configuration phase (KP), and wherein the monitoring means (10) is configured for outputting a data set which comprises at least one of the signal values (SW) of one of the process signals (PS) and the name of the field device (4) associated to the respective process signal (PS).

10. The monitoring means in accordance with any of claims 1 to 8, the monitoring means (10) being configured for reading out names (NP) of the process signals (PS) from the device description file (GB) of that field device (4) which corresponds to the channel identification (KK) belonging to the respective process signal (PS), during the configuration phase (KP), and wherein the monitoring means (10) is configured for outputting a data set which comprises at least one of the signal values (SW) of one of the process signals (PS) and the name (NP) of the respective process signal (PS).

11. The monitoring means in accordance with any of claims 1 to 8, the monitoring means (10) being configured for reading out names of the field devices (4) from the at least one initialization telegram (IT) during the configuration phase (KP), the monitoring means (10) being configured for reading out names (NP) of the process signals (PS) from the device description file (GB) of that field device (4) which corresponds to the channel identification (KK) belonging to the respective process signal (PS), during the configuration phase (KP), and the monitoring means (10) being configured for outputting a data set which comprises at least one of the signal values (SW) of one of the process signals (PS), the name (NP) of the respective process signal (PS) and the name of the field device (4) associated to the respective process signal (PS).

12. The monitoring means in accordance with any of the preceding claims, wherein the illegal range of values (UW) for the signal values (SW) of one of the process signals (PS) is derived by means of a knowledge base obtained from the data base (DB) or by means of a process model obtained from the data base.

13. A monitoring means system for monitoring a process (PZ) controlled by means of an automation system (1) which comprises an industrial data communication network (2), a process controller (3) connected to the industrial data communication network (2), and one or several field devices (4) connected to the industrial data communication network (2), the monitoring means system comprising:
monitoring means (10) in accordance with any of claims 1 to 12, and
a passive reader (11) configured for reading out at least one initialization telegram (IT) transmitted via the industrial data communication network (2) and for reading out process telegrams (PT), and configured for transmitting the at least one initialization telegram (IT) and the process telegrams (PT) to the monitoring means (10).

14. A method for operating monitoring means (10) for monitoring a process (PZ) controlled by means of an automation system (1) which comprises an industrial data communication network (2), a process controller (3) connected to the industrial data communication network (2), and one or several field devices (4) connected to the industrial data communication network (2), wherein several process signals (PS) are provided in the automation system (1), wherein a signal format (SF) and a channel (9) of one of the field devices (4) are associated to each of the process signals (PS), and wherein, for each of the process signals (PS), signal values (SW) in the respective associated signal format (SF), together with a channel identification (KK) of the respective channel (9), can be transmitted each via the industrial data communication network (2) in a process telegram (PT), comprising the steps of:
automatically creating a process signal description (PSB) by the monitoring means (10) during a configuration phase (KP) of the monitoring means (10) using at least one initialization telegram (IT) for the automation system (1) transmitted during an initialization phase of the industrial data communication network (2) between the process controller (3) and at least one of the field devices and using device description files (GB) associated each to one of the field devices (4), wherein the process signal description (PSB) indicates, for at least one of the process signals (PS), the respective signal format (SF) and the respective channel identification (KK);
automatically creating a data base (DB) by the monitoring means (10) during a learning phase (LP) of the monitoring means (10), wherein the data base (DB) comprises, for at least one of the process signals (PS), several signal values (SW) of the respective process signal (PS) which are each provided with a time stamp (ZT), wherein the signal values (SW) and the respective time stamps (ZT) are extracted from several process telegrams (PT) transmitted via the industrial data communication network (2) using the process signal description (PSB), wherein at least one illegal range of values (UW) is derived for at least one of the process signals (PS) from the data base (DB) for the signal values (SW) of the respective process signal (PS); and
automatically identifying a disturbance (ST) in the process (PZ) by the monitoring means (10) during an operation phase (BP) of the monitoring means (10), in case a current signal value (SW) of the signal values (SW) of one of the process signals (PS) is within the respective illegal range of values (UW), wherein the current signal value (SW) is extracted from a current process telegram (PT) of the process telegrams (PT) transmitted via the industrial data communication network (2), using the process signal description (PSB).

15. A computer program for performing a method in accordance with the preceding claim, when executed on a computer or processor.

## Revendications

1. Dispositif de surveillance pour surveiller un processus (PZ) qui est commandé au moyen d'un système d'automatisation (1) qui comporte un réseau de communication de données industriel (2), un appareil de commande de processus (3) raccordé au réseau de communication de données industriel (2) et un ou plusieurs dispositifs de terrain (4) raccordés au réseau de communication de données industriel (2), dans lequel sont prévus, dans le système d'automatisation (1), plusieurs signaux de processus (PS), où à chacun des signaux de processus (PS) est attribué un format de signal (SF) et un canal (9) de l'un des dispositifs de terrain (4), et où pour chacun des signaux de processus (PS) peuvent être transmises par le réseau de communication de données industriel (2) des valeurs de signal (SW) dans le format de signal (SF) attribué respectif ensemble avec un identificateur (KK) du canal respectif (9) chaque fois par un télégramme de processus (PT),
dans lequel le dispositif de surveillance (10) est conçu pour élaborer automatiquement une description de signal de processus (PSB) pendant une phase de configuration (KP) du dispositif de surveillance (10) à l'aide d'au moins un télégramme d'initialisation (IT) pour le système d'automatisation (1) transmis pendant une phase d'initialisation du réseau de communication de données industriel (2) entre l'appareil de commande de processus (3) et au moins l'un des dispositifs de terrain (4) et à l'aide de fichiers de description de dispositif (GB) qui sont associés, chacun, à l'un des dispositifs de terrain (4), où la description de signal de processus (PSB) indique, pour au moins un des signaux de processus (PS), le format de signal (SF) associé et l'identificateur de canal (KK) associé,
dans lequel le dispositif de surveillance (10) est conçu pour élaborer automatiquement une base de données (DB) pendant une phase d'apprentissage (LP) du dispositif de surveillance (10), dans lequel la base de données (DB) comporte, pour au moins l'un des signaux de processus (PS), plusieurs valeurs de signal (SW) du signal de processus respectif (PS) qui sont pourvues, chacune, d'un horodatage (ZT), dans lequel les valeurs de signal (SW) et l'horodatage associé (ZT) sont extraits, à l'aide de la description de signal de processus (PSB) de plusieurs télégrammes de processus (PT) transmis par le réseau de communication de données industriel (2), où pour au moins un des signaux de processus (PS) est dérivée de la base de données (DB), pour les valeurs de signal (SW) du signal de processus respectif (PS), au moins une plage de valeurs non admissible (UW), et
dans lequel le dispositif de surveillance (10) est conçu pour détecter automatiquement une perturbation (ST) dans le processus (PZ) pendant une phase de fonctionnement (BP) du dispositif de surveillance (10) au cas où une valeur de signal actuelle (SW) des valeurs de signal (SW) de l'un des signaux de processus (PS) se situe dans la plage de valeurs non admissible (UW), dans lequel la valeur de signal (SW) actuelle est extraite à l'aide de la description de signal de processus (PSB) d'un télégramme de processus actuel (PT) parmi les télégrammes de processus (PT) transmis par le réseau de communication de données industriel (2).

2. Dispositif de surveillance selon la revendication précédente, dans lequel les signaux de processus (PS) pour lesquels est dérivée respectivement au moins une plage de valeurs non admissible (UW) comportent au moins un signal de mesure d'un capteur qui est raccordé à l'un des canaux (9) de l'un des dispositifs de terrain (4), et/ou au moins un signal de commande pour un actionneur qui est raccordé à l'un des canaux (9) de l'un des dispositifs de terrain (4).

3. Dispositif de surveillance selon l'une des revendications précédentes, dans lequel le dispositif de surveillance (10) est conçu pour lire de l'au moins un télégramme d'initialisation (IT), pour chacun des dispositifs de terrain (4), un identificateur de fabricant (HK) et/ou un identificateur de type d'appareil (GK) pendant la phase de configuration (KP), dans lequel le dispositif de surveillance (10) est conçu pour sélectionner, pour chacun des dispositifs de terrain (4), le fichier de description de dispositif associé (GB) sur base de l'identificateur de fabricant (HK) et/ou de l'identificateur de type d'appareil (GK).

4. Dispositif de surveillance selon l'une des revendications précédentes, dans lequel le dispositif de surveillance (10) est conçu pour lire, pour chacun des dispositifs de terrain (4), de l'au moins un télégramme d'initialisation (IT) l'identificateur de canal (KK) pendant la phase de configuration (KP).

5. Dispositif de surveillance selon l'une des revendications précédentes, dans lequel le format de signal (SF) de l'un des signaux de processus (PS) comporte une première information de départ (SIG) pour les valeurs de signal (SW) dans les télégrammes de processus respectifs (PT), dans lequel le dispositif de surveillance (10) est conçu pour lire, pour chacun des signaux de processus (PS), la première information de départ (SIG) du fichier de description de dispositif (GB) de l'appareil de terrain (4) qui correspond à l'identificateur de canal (KK) appartenant au signal de processus respectif.

6. Dispositif de surveillance selon l'une des revendications précédentes, dans lequel le format de signal (SF) de l'un des signaux de processus (PS) comporte une deuxième information de départ (SIT) pour les valeurs de signal (SW) dans les télégrammes de processus (PT) respectifs, dans lequel le dispositif de surveillance (10) est conçu pour lire, pour chacun des signaux de processus (PS), la deuxième information de départ (SIT) de l'au moins un télégramme d'initialisation (IT) pendant la phase de configuration (KP).

7. Dispositif de surveillance selon l'une des revendications précédentes, dans lequel le format de signal (SF) de l'un des signaux de processus (PS) comporte une définition de type de données (DT) pour les valeurs de signal (SW) dans les télégrammes de processus (PT) respectifs, dans lequel le dispositif de surveillance (10) est conçu pour lire, pour chacun des signaux de processus (PS), la définition de type de données (DT) du fichier de description de dispositif (GB) du dispositif de terrain (4) qui correspond à l'identificateur de canal (KK) appartenant au signal de processus respectif (PS) pendant la phase de configuration (KP).

8. Dispositif de surveillance selon l'une des revendications précédentes, dans lequel le format de signal (SF) de l'un des signaux de processus (PS) comporte une définition de longueur de données (DL) pour les valeurs de signal (SW) dans les télégrammes de processus respectifs (PT), dans lequel le dispositif de surveillance (10) est conçu pour lire, pour chacun des signaux de processus (PS), la définition de longueur de données (DL) du fichier de description de dispositif (GB) du dispositif de terrain (4) qui correspond à l'identificateur de canal (KK) appartenant au signal de processus respectif (PS) pendant la phase de configuration (KP).

9. Dispositif de surveillance selon l'une des revendications précédentes, dans lequel le dispositif de surveillance (10) est conçu pour lire les noms des dispositifs de terrain (4) de l'au moins un télégramme d'initialisation (IT) pendant la phase de configuration (KP) et dans lequel le dispositif de surveillance (10) est conçu pour sortir un ensemble de données qui comporte au moins l'une des valeurs de signal (SW) de l'un des signaux de processus (PS) et le nom du dispositif de terrain (4) associé au signal de processus (PS) respectif.

10. Dispositif de surveillance selon l'une des revendications 1 à 8, dans lequel le dispositif de surveillance (10) est conçu pour lire les noms (NP) des signaux de processus (PS) du fichier de description de dispositif (GB) du dispositif de terrain (4) qui correspond à l'identificateur de canal (KK) appartenant au signal de processus respectif (PS) pendant la phase de configuration (KP) et dans lequel le dispositif de surveillance (10) est conçu pour sortir un ensemble de données qui comporte au moins une des valeurs de signal (SW) de l'un des signaux de processus (PS) et le nom (NP) du signal de processus (PS) respectif.

11. Dispositif de surveillance selon l'une des revendications 1 à 8, dans lequel le dispositif de surveillance (10) est conçu pour lire les noms des dispositifs de terrain de l'au moins un télégramme d'initialisation (IT) pendant la phase de configuration (KP), dans lequel le dispositif de surveillance (10) est conçu pour lire les noms (NP) des signaux de processus (PS) du fichier de description de dispositif (GB) du dispositif de terrain (4) qui correspond à l'identificateur de canal (KK) appartenant au signal de processus respectif (PS) pendant la phase de configuration (KP), et dans lequel le dispositif de surveillance (10) est conçu pour sortir un ensemble de données qui comporte au moins une des valeurs de signal (SW) de l'un des signaux de processus (PS), le nom (NP) du signal de processus respectif (PS) et le nom du dispositif de terrain (4) associé au signal de processus respectif (PS).

12. Dispositif de surveillance selon l'une des revendications précédentes, dans lequel la plage de valeurs non admissible (UW) pour les valeurs de signal (SW) d'un des signaux de processus (PS) est dérivée au moyen d'une base de connaissances obtenue à partir de la base de données (DB) ou au moyen d'un modèle de processus obtenu à partir de la base de données.

13. Système de dispositif de surveillance pour surveiller un processus (PZ) qui est commandé au moyen d'un système d'automatisation (1) qui comporte un réseau de communication de données industriel (2), un dispositif de commande de processus (3) raccordé au réseau de communication de données industriel (2) et un ou plusieurs dispositifs de terrain (4) raccordés au réseau de communication de données industriel (2), dans lequel le système de dispositif de surveillance comprend:
un dispositif de surveillance (10) selon l'une des revendications 1 à 12, et
un dispositif de lecture passif (11) qui est conçu pour lire au moins un télégramme d'initialisation (IT) transmis par le réseau de communication de données industriel (2) et pour lire les télégrammes de processus (PT) et qui est conçu pour envoyer l'au moins un télégramme d'initialisation (IT) et les télégrammes de processus (PT) au dispositif de surveillance (10).

14. Procédé permettant de faire fonctionner un dispositif de surveillance (10) pour surveiller un processus (PZ) qui est commandé au moyen d'un système d'automatisation (1) qui comporte un réseau de communication de données industriel (2), un dispositif de commande de processus (3) raccordé au réseau de communication de données industriel (2) et un ou plusieurs dispositifs de terrain (4) raccordés au réseau de communication de données industriel (2), dans lequel sont prévus, dans le système d'automatisation (1), plusieurs signaux de processus (PS), où à chacun des signaux de processus (PS) est attribué un format de signal (SF) et un canal (9) de l'un des dispositifs de terrain (4), et où pour chacun des signaux de processus (PS) peuvent être transmises par le réseau de communication de données industriel (2) des valeurs de signal (SW) dans le format de signal (SF) attribué respectif ensemble avec un identificateur (KK) du canal respectif (9) chaque fois par un télégramme de processus (PT), aux étapes suivantes consistant à:
élaborer automatiquement, par le dispositif de surveillance (10), une description de signal de processus (PSB) pendant une phase de configuration (KP) du dispositif de surveillance (10) à l'aide d'au moins un télégramme d'initialisation (IT) pour le système d'automatisation (1) transmis pendant une phase d'initialisation du réseau de communication de données industriel (2) entre l'appareil de commande de processus (3) et au moins l'un des dispositifs de terrain et à l'aide de fichiers de description de dispositif (GB) qui sont associés, chacun, à l'un des dispositifs de terrain (4), où la description de signal de processus (PSB) indique, pour au moins un des signaux de processus (PS), le format de signal (SF) associé et l'identificateur de canal (KK) associé,
élaborer automatiquement, par le dispositif de surveillance (10), une base de données (DB) pendant une phase d'apprentissage (LP) du dispositif de surveillance (10), où la base de données (DB) comporte, pour au moins l'un des signaux de processus (PS), plusieurs valeurs de signal (SW) du signal de processus respectif (PS) qui sont pourvues, chacune, d'un horodatage (ZT), où les valeurs de signal (SW) et l'horodatage associé (ZT) sont extraits à l'aide de la description de signal de processus (PSB) de plusieurs télégrammes de processus (PT) transmis par le réseau de communication de données industriel (2), où pour au moins un des signaux de processus (PS) est dérivée de la base de données (DB), pour les valeurs de signal (SW) du signal de processus respectif (PS), au moins une plage de valeurs non admissible (UW), et
détecter automatiquement, par le dispositif de surveillance (10), une perturbation (ST) dans le processus (PZ) pendant une phase de fonctionnement (BP) du dispositif de surveillance (10) au cas où une valeur de signal actuelle (SW) des valeurs de signal (SW) de l'un des signaux de processus (PS) se situe dans la plage de valeurs non admissible (UW), où la valeur de signal (SW) actuelle est extraite à l'aide de la description de signal de processus (PSB) d'un télégramme de processus actuel (PT) parmi les télégrammes de processus (PT) transmis par le réseau de communication de données industriel (2).

15. Programme d'ordinateur pour réaliser un procédé selon la revendication précédente lorsqu'il est exécuté sur un ordinateur ou un processeur.
